# EUROPÄISCHE PATENTSCHRIFT

(11) **EP 3 114 830 B1**
(45) Veröffentlichungstag und Bekanntmachung des Hinweises auf die Patenterteilung: **07.10.2020**
(21) Anmeldenummer: 15710140.3
(22) Anmeldetag: 05.03.2015
(51) Int. Cl.: H04N 1/00, H04N 1/46

(54) **VORRICHTUNG UND VERFAHREN ZUR OPTISCHEN ERFASSUNG EINES DOUKUMENTS UND VERFAHREN ZU HERSTELLUNG EINER SOLCHEN VORRICHTUNG**
DEVICE AND METHOD FOR OPTICALLY DETECTING A DOCUMENT AND METHOD FOR FABRICATION OF SAID DEVICE
DISPOSITIF ET PROCEDE DE MESURE OPTIQUE D'UN DOCUMENT ET PROCÉDÉ POUR LA FABRICATION D'UN TEL DISPOSITIF

(30) Priorität: 07.03.2014 DE 102014204191
(43) Veröffentlichungstag der Anmeldung: 11.01.2017
(73) Patentinhaber: Bundesdruckerei GmbH, 10969 Berlin (DE)
(72) Erfinder: PEINZE, Franziska, 12589 Berlin (DE); DRESSEL, Olaf, 14641 Wustermark (DE); VAN DE WYNCKEL, Werner, B-1851 Humbeek (Grimbergen) (BE)
(74) Vertreter: Patentanwälte Bressel und Partner mbB
(86) Internationale Anmeldenummer: PCT/EP2015/054572
(87) Internationale Veröffentlichungsnummer: WO 2015/132324

(56) Entgegenhaltungen:
- EP-A1- 2 062 730
- DE-A1-102008 012 425

## Beschreibung

Die Erfindung betrifft eine Vorrichtung und ein Verfahren zur Herstellung eines Wert- und/oder Sicherheitsdokuments. Weiter betrifft die Erfindung ein Verfahren zur Herstellung einer Vorrichtung zur Herstellung eines Wert- und/oder Sicherheitsdokuments.

Bei der Herstellung von Wert- und/oder Sicherheitsdokumenten kann es erforderlich sein, Trägerkörper, insbesondere kartenförmige Trägerkörper, zu bedrucken, insbesondere um Informationen und/oder Sicherheitsmerkmale auf oder in dem Trägerkörper bereitzustellen. Bisher bekannt ist das Bedrucken einzelner Folien, insbesondere Kunststofffolien, wobei die bedruckte Folie und weitere Folien dann zu einem Laminat laminiert werden.

Es ist wünschenswert, zur Vereinfachung der Herstellung einen bereits als Laminat bereitgestellten Kartenkörper zu bedrucken. Hierfür müssen jedoch spezielle Druckfluide, insbesondere Tinten, und spezielle Druckköpfe verwendet werden.

Die DE 10 2008 012 425 A1 offenbart eine Druckvorrichtung zum Herstellen von Sicherheits- und/oder Wertdruckstücken. Die Druckvorrichtung umfasst eine Druckeinrichtung, die mit einem Reservoir gekoppelt ist. Hierbei ist jedoch offenbart, dass das Reservoir in einer Druckfluidausstoßrichtung hinter der Druckeinrichtung angeordnet ist, wobei die Druckeinrichtung einen Druckkopf ausbildet. Ist die Druckausstoßrichtung parallel zu einer Gravitationsrichtung, also einer Richtung der Gravitationskraft, so ergibt sich, dass das Reservoir über dem Druckkopf angeordnet ist. Fällt in einer solchen Anordnung beispielsweise eine Stromversorgung aus oder erfolgt eine unvorhergesehene Abschaltung, so ist es möglich, das Druckfluid, insbesondere Tinte, aufgrund der Gravitationskraft aus dem Reservoir und aus Leitungen vom Reservoir zum Druckkopf fließt und dort aus Düsen des Druckkopfs ausläuft. Hierdurch kann ein zu bedruckender Trägerkörper in unerwünschter Weise beschädigt werden. Auch können weitere Teile der Druckeinrichtung, z.B. Teile einer Transporteinrichtung, durch derart auslaufenden Druckfluid verschmutzt und in ihrer Funktionsfähigkeit beeinträchtigt werden.

Die EP 2 062 730 A1 offenbart einen Druckkopf für einen Tintenstrahldrucker mit mehreren Druckdüsen.

Herkömmliche Vorrichtungen zur Herstellung eines Wert- und/oder Sicherheitsdokuments, z.B. Druckeinrichtungen, weisen in der Regel genau eine vorbestimmte Konfiguration von Funktionsmodulen auf, z.B. eine vorbestimmte und festgelegte Anzahl und Anordnung von Tintenpatronen unterschiedlicher Farben.

Derartige Vorrichtungen schränken jedoch eine Verwendbarkeit der Vorrichtungen, beispielsweise eine Verwendbarkeit zur Herstellung unterschiedlicher Wert- und/oder Sicherheitsdokumente, ein.

Insbesondere Druckeinrichtungen sind zudem ausschließlich auf eine einmal festgelegte und nicht mehr veränderbare Funktionalität der Druckeinrichtung beschränkt. Weitere im Herstellungsverfahren durchzuführende Schritte, z.B. ein Trocknen von frisch aufgebrachter Tinte oder ein Härten von frisch aufgebrachter UV-härtenden Tinte, können entweder nicht von der Druckeinrichtung oder nur von fest und nicht auswechselbar in der Druckeinrichtung installierten Zusatzeinrichtungen durchgeführt werden. Im ersten Fall ist in nachteiliger Weise die Verwendung einer zusätzlichen Einrichtung notwendig. Des Weiteren gibt es Drucksysteme, bei welchen verschiedene Module, z.B. ein Druckmodul für den CMYK-Farbraum und ein Druckmodul für den RGB-Farbraum und ein Modul für die Applikation einer Folie kombiniert werden können. Hierbei handelt es sich jedoch um baulich getrennte Geräte die jeweils nur eine festgelegte und nicht veränderbare Funktionalität aufweisen und lediglich hintereinander angeordnet werden können, wodurch sich aber nachteilig ein hoher Bauraumbedarf ergibt.

Es stellt sich das technische Problem, eine Vorrichtung und ein Verfahren zur Herstellung eines Wert- und/oder Sicherheitsdokuments sowie ein Verfahren zur Herstellung einer solchen Vorrichtung zu schaffen, die eine Verwendbarkeit einer Vorrichtung zur Herstellung von Wert- und/oder Sicherheitsdokumenten, insbesondere von Wert- und/oder Sicherheitsdokumenten verschiedener Arten, erhöhen.

Die Lösung des technischen Problems ergibt sich durch die Gegenstände mit den Merkmalen der Ansprüche 1, 6 und 8. Weitere vorteilhafte Ausgestaltungen ergeben sich aus den Unteransprüchen.

Es ist eine Grundidee der Erfindung, eine Vorrichtung zur Herstellung von Wert- und/oder Sicherheitsdokumenten bereitzustellen, die eine Vielzahl von Aufnahmepositionen und/oder -orientierungen für Funktionsmodule bereitstellt, wobei diese Funktionsmodule austauschbar in diesen Aufnahmepositionen und/oder mit diesen Aufnahmeorientierungen angeordnet werden können. Dies ermöglicht eine Kombination von beliebigen Funktionsmodulen zur Herstellung eines Wert- und/oder Sicherheitsdokuments, wodurch die Vorrichtung z.B. durch eine unterschiedliche Bestückung mit Funktionsmodulen an die Herstellung von Wert- und/oder Sicherheitsdokumenten unterschiedlicher Arten angepasst werden kann.

Vorgeschlagen wird eine Vorrichtung zur Herstellung eines Wert- und/oder Sicherheitsdokuments.

Als Wert- und/oder Sicherheitsdokument kann jedes Dokument bezeichnet werden, das eine physikalische Entität ist, die gegen ein unautorisiertes Herstellen und/oder Verfälschen durch Sicherheitsmerkmale oder -elemente geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, können als Sicherheitselemente bezeichnet werden. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar. Beispiele für Sicherheitsdokumente, welche auch Wertdokumente umfassen, die einen Wert repräsentieren, umfassen beispielsweise Reisepässe, Personalausweise, Führerscheine, Identitätskarten, Zutrittskontrollausweise, Krankenkassenkarten, Banknoten, Postwertzeichen, Bankkarten, Kreditkarten, Smartcards, Tickets und Etiketten.

Die Vorrichtung weist eine Trägereinrichtung auf. Die Trägereinrichtung kann insbesondere ortsfest relativ zu einem Fundament oder einer Abstellfläche der Vorrichtung angeordnet sein. Die Trägereinrichtung kann insbesondere eine Gesamtheit von Elementen bezeichnen, die, wie nachfolgend noch näher erläutert, zur Aufnahme, insbesondere zur Befestigung und Ausrichtung, von Funktionsmodulen dienen.

Weiter weist die Trägereinrichtung Aufnahmeelemente zur Befestigung und/oder Ausrichtung einer vorbestimmten Anzahl von Funktionsmodulen auf oder bildet derartige Aufnahmeelemente aus. Die Anzahl ist insbesondere größer als 1 und kann beispielsweise 8 oder 10 betragen.

Ein Aufnahmeelement kann beispielsweise ein Befestigungselement oder ein Teil eines Befestigungselements bezeichnen, wobei ein Befestigungselement ein Element zur Herstellung einer mechanischen Verbindung eines Funktionsmoduls mit der Trägereinrichtung bezeichnet. Die mechanische Verbindung ist insbesondere eine lösbare mechanische Verbindung. Weiter kann die mechanische Verbindung eine form- und/oder kraftschlüssige Verbindung sein. Vorstellbar sind z.B. Rastverbindungen, Klemmverbindungen, Schraubverbindungen und weitere, insbesondere lösbare, mechanische Verbindungen. Alternativ oder kumulativ kann ein Aufnahmeelement ein Ausrichtelement sein, wobei ein Ausrichtelement ein Element zur Herstellung einer vorbestimmten Position und/oder Orientierung des Funktionsmoduls relativ zur Trägereinrichtung bezeichnen kann. Beispielsweise kann ein Ausrichtelement als Führungsbolzen oder Anlagefläche oder Führungskerbe ausgebildet sein.

Selbstverständlich kann ein Funktionsmodul korrespondierende Aufnahmeelemente aufweisen, wobei ein oder mehrere korrespondierende(s) Aufnahmeelement(e) des Funktionsmoduls mit einem oder mehreren Aufnahmeelement(en) der Trägereinrichtung wechselwirken kann/können, um das Funktionsmodell an der Trägereinrichtung aufzunehmen, insbesondere also zu befestigen und/oder auszurichten. Beispielsweise kann das Funktionsmodul eine Gewindebohrung und die Trägereinrichtung eine korrespondierende Durchgangsbohrung aufweisen, wodurch das Funktionsmodul an die Trägereinrichtung geschraubt werden kann.

Mittels der Aufnahmeelemente kann also mindestens ein Funktionsmodul an der Trägereinrichtung in einer gewünschten Position und/oder mit einer gewünschten Ausrichtung festgelegt werden.

Weiter sind die Aufnahmeelemente derart angeordnet und/oder ausgebildet, dass mehrere Funktionsmodule in einer beliebigen Reihenfolge, insbesondere in oder entlang mindestens einer Raumrichtung, an der Trägereinrichtung befestigbar sind. Auch können die mehreren Funktionsmodule mit gleichen oder verschiedenen Abständen zueinander, insbesondere mit gleichen oder verschiedenen Abständen zum jeweils entlang der mindestens einen Raumrichtung nächstfolgenden Funktionsmodul, an der Trägereinrichtung befestigbar sein. Insbesondere können die Funktionsmodule austauschbar, z.B. lösbar, an der Trägereinrichtung befestigt sein. Dadurch ist es in vorteilhafter Weise im Gegensatz z.B. zu herkömmlichen Druckern nicht nur möglich ein Funktionsmodul, z.B. ein Cyan-Druckmodul, gegen ein Funktionsmodul gleichen Typs, z.B. ein neues Cyan-Druckmodul, sondern gegen ein Funktionsmodul eines verschiedenen Typs, z.B. ein Heizmodul, auszutauschen. Somit können sehr verschiedene Kombinationen von Funktionsmodulen, z.B. auch mit Schmuckfarben-Druckmodulen und/oder Druckmodulen für fluoreszierende Farben, bereitgestellt werden. Ebenso können Module zum Beispiel zur Substratvorbehandlung oder zur Lackierung eingesetzt werden.

Durch die Aufnahmeelemente ist also eine vorbestimmte Anzahl an Aufnahmepositionen und/oder eine vorbestimmte Anzahl von Aufnahmeorientierungen für Funktionsmodule festgelegt. Auch kann durch die Aufnahmeelemente in einer bestimmten Aufnahmeposition eine vorbestimmte Aufnahmeorientierung festgelegt sein. Auch können durch die Aufnahmeelemente in einer bestimmten Aufnahmeposition mehrere vorbestimmte Aufnahmeorientierungen festgelegt sein.

Insbesondere können die Aufnahmeelemente derart angeordnet und/oder ausgebildet sein, dass mehrere Funktionsmodule, beispielsweise alle Funktionsmodule, mit der gleichen Orientierung, jedoch an verschiedenen Positionen, an der Trägereinrichtung befestigt werden können.

Nachfolgend kann auf folgendes Referenzkoordinatensystem Bezug genommen werden. Das Referenzkoordinatensystem kann ein, insbesondere kartesisches, Koordinatensystem sein, welches eine erste Raumrichtung (longitudinale Richtung), eine zweite Raumrichtung (laterale Richtung) und eine dritte Raumrichtung (vertikale Richtung) aufweist. Die Raumrichtungen können orthogonal zueinander orientiert sein. Hierbei kann das Wert- und/oder Sicherheitsdokument mittels der Positioniereinrichtung in und entgegen der ersten Raumrichtung und/oder in oder entgegen der zweiten Raumrichtung bewegbar sein. Positionen und oder Ausrichtungen bzw. Orientierungen von Funktionsmodulen können hierbei relativ zu diesem Koordinatensystem bestimmbar sein.

Insbesondere können die Aufnahmeelemente derart angeordnet und/oder ausgebildet sein, dass ein Wert- und/oder Sicherheitselement mittels der Positioniereinrichtung in der ersten Raumrichtung an, insbesondere unter, den mehreren an der Trägereinrichtung aufgenommenen bzw. festgelegten Funktionsmodulen vorbei bewegt werden kann. Dies bedeutet, dass die Aufnahmeelemente derart angeordnet und/oder ausgebildet sein können, dass Funktionsmodule in der ersten Raumrichtung nacheinander, insbesondere mit einer gewünschten Reihenfolge, an der Trägereinrichtung befestigt werden können.

Die Trägereinrichtung kann sich in eine Raumrichtung erstrecken. In dieser Raumrichtung kann die Trägereinrichtung z.B. eine vorbestimmte Länge aufweisen. Beispielsweise kann die Trägereinrichtung als ein(e) sich in einer Raumrichtung erstreckende Trägerschiene, C-Profil, T-Profil oder L-Profil ausgebildet sein. Entlang dieser Raumrichtung können die vorhergehend erläuterten Aufnahmepositionen, insbesondere eine vorbestimmte Anzahl von Aufnahmepositionen, durch die Aufnahmeelemente bereitgestellt werden. Somit sind die Funktionsmodule entlang dieser Raumrichtung, insbesondere mit einer vorbestimmten Reihenfolge und/oder mit vorbestimmten Abständen zum in der Raumrichtung jeweils nächstfolgenden Druck- oder Funktionsmodul, an der Trägereinrichtung befestigbar. Die Abstände können hierbei gleich oder voneinander verschieden sein. Die Raumrichtung kann z.B. die erste Raumrichtung sein. Die Länge kann hierbei größer als eine Breite der Trägereinrichtung sein, z.B. eine Breite in der zweiten Raumrichtung.

Dies ermöglicht in vorteilhafter Weise eine hinsichtlich einer Anzahl, einer Funktionalität und einer Reihenfolge von Funktionsmodulen variable Ausbildung der Vorrichtung zur Herstellung eines Wert- und/oder Sicherheitsdokuments. Die Vorrichtung kann somit in vorteilhafter Weise an die zur Herstellung eines Wert- und/oder Sicherheitsdokuments einer bestimmten Art, beispielsweise einer Banknote oder eines Personalausweises, notwendigen Verfahrensschritte durch die Anordnung von Funktionsmodulen an der Trägereinrichtung angepasst werden. Alleine durch die Änderung der Reihenfolge von Druckmodulen kann z.B. auch eine Reihenfolge der aufgebrachten Druckschichten verändert werden. So ist es möglich, z.B. eine Fluoreszenzschicht über oder unter eine CMYK-Farbschicht zu drucken, je nachdem, ob das Fluoreszenz-Druckmodul vor oder nach einem oder mehreren CMYK-Druckmodul(en) angeordnet wird. Diese Reihenfolge der Druckschichten kann ein Sicherheitsmerkmal ausbilden, wobei dieses Sicherheitsmerkmal am fertig hergestellten Dokument zur Echtheitsüberprüfung überprüft werden kann. Somit kann die Sicherheit des zu fertigenden Dokuments verbessert werden.

Weiter ermöglicht die vorgeschlagene Ausbildung der Vorrichtung zur Herstellung eines Wert- und/oder Sicherheitsdokuments die Bereitstellung einer sogenannten Desktop-Herstellungseinrichtung, die trotz einer breiten Anwendbarkeit nur einen geringen Bauraum erfordert. Gleichzeitig wird eine hohe Flexibilität zur Herstellung einer Vielzahl verschiedenartiger Dokumente erreicht. Durch einen mechanischen einfachen und zeitlich schnellen Funktionsmodulaustausch kann die vorgeschlagene Vorrichtung leicht auf die Herstellung sehr unterschiedlicher Dokumente umgerüstet werden.

Darüber hinaus können in vorteilhafter Weise die meisten wartungsanfälligen Bauteile in den Funktionsmodulen angeordnet sein, sodass eine Wartung der einzelnen Funktionsmodule einfacher und ohne Produktionsunterbrechung durchgeführt werden kann.

Erfindungsgemäß weist die Trägereinrichtung einen ersten Aufnahmeabschnitt und einen weiteren Aufnahmeabschnitt auf, wobei der weitere Aufnahmeabschnitt mit einem vorbestimmten Winkel schräg zum ersten Aufnahmeabschnitt angeordnet ist. Der Winkel ist insbesondere größer als 0° und kleiner als 180°.

Dies kann bedeuten, dass eine zentrale Längsachse, insbesondere eine zentrale Symmetrieachse, des ersten Aufnahmeabschnitts mit einer zentralen Längsachse, insbesondere einer zentralen Symmetrieachse, des weiteren Aufnahmeabschnitts den vorbestimmten Winkel einschließt. Vorzugsweise kann der erste Aufnahmeabschnitt senkrecht zum weiteren Aufnahmeabschnitt angeordnet sein. Die zentrale Längsachse einer der Aufnahmeabschnitte kann parallel zur vorhergehend erläuterten dritten Raumrichtung orientiert sein. Alternativ oder kumulativ kann die zentrale Längsachse des verbleibenden Aufnahmeabschnitts parallel zur zweiten Raumrichtung orientiert sein.

Beispielsweise können der erste Aufnahmeabschnitt und der weitere Aufnahmeabschnitt durch einen L-Träger bzw. ein L-Profil der Trägereinrichtung ausgebildet werden. Insbesondere kann also die Trägereinrichtung ein im Querschnitt L-förmigen Abschnitt aufweisen, der den ersten und den weiteren Aufnahmeabschnitt ausbildet. Eine Querschnittsebene kann hierbei insbesondere senkrecht zur vorhergehend erläuterten ersten Raumrichtung orientiert sein. Eine L-förmige Ausbildung schließt hierbei nicht aus, dass die Trägereinrichtung einen Verbindungsabschnitt zur Verbindung des ersten und des weiteren Aufnahmeabschnitts aufweist, wobei der Verbindungsabschnitt gegenüber dem ersten und dem weiteren Aufnahmeabschnitt jeweils mit einem vorbestimmten Winkel abgeschrägt orientiert sein kann.

Die Trägereinrichtung kann weiter einen Halteabschnitt für die vorhergehend erläuterte Positioniereinrichtung aufweisen. Der Halteabschnitt kann hierbei als vom ersten und/oder weiteren Aufnahmeabschnitt baulich separat ausgebildeter Abschnitt ausgebildet sein. Auch kann der weitere Halteabschnitt an dem ersten Aufnahmeabschnitt und/oder dem weiteren Aufnahmeabschnitt befestigt sein. Insbesondere kann der Halteabschnitt zur Halterung mindestens einer Führungseinrichtung zur Führung einer Bewegung der Positioniereinrichtung dienen.

Der erste Aufnahmeabschnitt kann hierbei, insbesondere entlang der zweiten Raumrichtung, beabstandet von der Positioniereinrichtung angeordnet sein. Der weitere Aufnahmeabschnitt kann sich von dem ersten Aufnahmeabschnitt, insbesondere entlang der zweiten Raumrichtung, hin zur Positioniereinrichtung erstrecken.

In einer weiteren Ausführungsform umfasst die Vorrichtung mindestens ein Funktionsmodul, wobei das Funktionsmodul an der Trägereinrichtung in einer vorbestimmten Position und/oder mit einer vorbestimmten Ausrichtung befestigt ist. Insbesondere kann die Vorrichtung mehr als ein Funktionsmodul umfassen, die an verschiedenen Positionen und/oder mit verschiedenen oder gleichen Ausrichtungen an der Trägereinrichtung befestigt sind.

Die Funktionsmodule können hierbei insbesondere derart an der Trägereinrichtung befestigt sein, dass zumindest ein Teil des Funktionsmoduls, insbesondere in der dritten Raumrichtung, über der Positioniereinrichtung anordenbar ist.

Ein Funktionsmodul bezeichnet hierbei ein Modul, welches zumindest einen Verfahrensschritt oder einen Teilschritt eines Verfahrensschrittes bei der Herstellung eines Wert- und/oder Sicherheitsdokuments ausführen kann. Beispielhafte Funktionsmodule werden nachfolgend näher erläutert.

In einer bevorzugten Ausführungsform weist das Funktionsmodul einen ersten Abschnitt und einen weiteren Abschnitt auf, wobei der weitere Abschnitt mit dem vorbestimmten Winkel schräg zum ersten Abschnitt angeordnet ist. Der Winkel ist insbesondere größer als 0° und kleiner als 180°. Dies kann bedeuten, dass eine zentrale Längsachse, insbesondere eine zentrale Symmetrieachse, des ersten Abschnitts mit einer zentralen Längsachse, insbesondere einer zentralen Symmetrieachse, des weiteren Abschnitts den vorbestimmten Winkel einschließt. Vorzugsweise kann der erste Abschnitt senkrecht zum weiteren Abschnitt angeordnet sein. Die Abschnitte können Gehäuseabschnitte sein, die insbesondere einen Gehäuseinnenraum aufweisen.

Somit weisen ein Funktionsmodul als auch die Trägereinrichtung Abschnitte auf, die die gleichen Orientierungen relativ zueinander aufweisen. Dies vereinfacht die Herstellung einer gewünschten Ausrichtung.

Somit kann der erste Abschnitt, insbesondere eine äußere Oberfläche des ersten Abschnitts, an dem ersten Aufnahmeabschnitt, insbesondere einer äußeren Oberfläche des ersten Aufnahmeabschnitts, anliegen. Auch kann zumindest ein Teil des weiteren Abschnitts, insbesondere ein Teil einer äußeren Oberfläche des weiteren Abschnitts, an zumindest einem Teil des weiteren Aufnahmeabschnitts, insbesondere einem Teil einer Oberfläche des weiteren Aufnahmeabschnitts, anliegen.

Hierdurch ergibt sich in vorteilhafter Weise eine stabile Halterung mit einer gewünschten Ausrichtung des Funktionsmoduls an der Trägereinrichtung. Die Trägereinrichtung und ein Funktionsmodul weisen hierbei zueinander korrespondierende geometrische Ausbildungen auf, die eine Anordnung und Ausrichtung des Funktionsmoduls an der Trägereinrichtung vereinfachen.

In einer weiteren Ausführungsform ist das Funktionsmodul als Druckmodul ausgebildet. Ein Druckmodul kann hierbei ein Modul bezeichnen, durch welches ein Druckfluid auf das (herzustellende) Wert- und/oder Sicherheitsdokument aufbringbar ist.

Mittels eines Druckmoduls kann beispielsweise eine Grundfarbe aus einem RGB-Farbraum aufbringbar sein. Auch kann mittels eines Druckmoduls eine Grundfarbe aus einem CMYK-Farbraum aufbringbar sein. Auch kann mittels eines Druckmoduls eine Schmuckfarbe oder eine funktionelle Farbe aufbringbar sein. Weiter kann mittels eines Druckmoduls ein Lack aufbringbar sein. Selbstverständlich kann die vorgeschlagene Vorrichtung mehrere Druckmodule, die insbesondere mit einer vorbestimmten Reihenfolge und/oder verschiedenen oder gleichen Abständen zueinander entlang einer der Bewegungsrichtungen der Positioniereinrichtung angeordnet sind, umfassen, beispielsweise ein Druckmodul pro Grundfarbe des RGB-Farbraums, ein Druckmodul pro Grundfarbe des CMYK-Farbraums sowie ein Druckmodul pro einer gewünschten Schmuckfarbe oder funktionellen Farbe. Weiter kann auch ein Material zur Erzeugung eines Volumenhologramms mittels eines Druckmoduls aufbringbar sein.

Hierdurch kann das (herzustellende) Wert- und/oder Sicherheitsdokument, insbesondere verschiedene Teilbereiche, mit verschiedenen Farben bedruckt werden.

Alternativ kann das Funktionsmodul als Heizmodul ausgebildet sein. Ein Heizmodul kann hierbei eine Einrichtung zur Erzeugung thermischer Energie umfassen. Mittels eines Heizmoduls kann thermische Energie zum (herzustellenden) Wert- und/oder Sicherheitsdokument übertragen werden, beispielsweise um ein frisch aufgebrachtes Druckfluid zu trocknen. Weiter alternativ kann das Funktionsmodul als Strahlungsmodul ausgebildet sein, insbesondere als UV (Ultraviolett)-Strahlungsmodul. Mittels eines Strahlungsmoduls kann das (herzustellende) Wert- und/oder Sicherheitsdokument bestrahlbar sein, insbesondere mit einer Strahlung, die einen vorbestimmten Wellenlängenbereich, beispielsweise einen UV-Wellenlängenbereich, aufweist. Dies kann z.B. erforderlich sein, um einen, z.B. mittels eines Druckmoduls aufgebrachten Lack, zu härten.

Weiter alternativ kann das Funktionsmodul als Oberflächenvorbehandlungs-Modul ausgebildet sein. Ein solches Funktionsmodul kann zum Beispiel mittels Plasma oder Corona eine Oberfläche des Trägerkörpers bearbeiten. Hierdurch kann die Oberflächeneigenschaft des zu bedruckenden Substrats gezielt eingestellt werden. Der Trägerkörper kann hierbei ein zu bearbeitendes, insbesondere auch ein zu bedruckendes, Substrat bezeichnen.

In einer weiteren Ausführungsform ist das Funktionsmodul als Druckmodul ausgebildet, wobei das Druckmodul zumindest einen Druckkopf und zumindest einen ersten Behälter umfasst, wobei der mindestens eine Druckkopf einen Druckkopfeinlass und mindestens eine Düse aufweist, wobei der Druckkopf einen Druckkopfauslass aufweist und über den Druckkopfauslass mit dem ersten Behälter, insbesondere fluidtechnisch, verbunden ist, wobei zumindest ein Teil des ersten Behälters in einer Düsenauslassrichtung vor dem mindestens einen Druckkopfauslass angeordnet ist. Ist das Druckmodul an der Trägereinrichtung befestigt und/oder ausgerichtet, so kann die Düsenauslassrichtung parallel zu der vorhergehend erläuterten dritten Raumrichtung orientiert sein.

Der erste Behälter ist hierbei ein Behälter für ein Druckfluid oder eine Druckflüssigkeit, insbesondere für Tinte, wobei das Druckmodul zum Bedrucken des Trägerkörpers mit dem Druckfluid dient. Der erste Behälter kann hierbei auch als Auffangbehälter bezeichnet werden. Beispielsweise kann ein Einlass des weiteren Behälters fluidtechnisch mit dem Druckkopfauslass verbunden sein.

Durch die mindestens eine Düse kann das Druckfluid hin zum Trägerkörper ausgestoßen werden und somit aus dem Druckkopf austreten. Der Ausstoß kann hierbei aktorgestützt erfolgen, wobei z.B. eine vorbestimmte Druckfluidmenge aus der mindestens einen Düse durch eine entsprechende Ansteuerung eines Aktors oder mehrerer Aktoren aus der Düse ausgestoßen werden kann. Hierdurch können z.B. Druckfluidtropfen erzeugt werden.

Es können verschiedene Verfahren zum Ausstoß einer Druckfluidmenge aus der mindestens einen Düse genutzt werden, beispielsweise die bekannte Bubble-Jet-Technik oder, vorzugsweise, ein piezogestütztes Verfahren, wobei Druckfluid aufgrund einer durch eine elektrische Größe bzw. deren Veränderung bedingte Verformung von Elementen durch mindestens eine Düse gepresst wird.

Die mindestens eine Düse weist hierbei die Düsenauslassrichtung auf. Diese kann beispielsweise entlang einer zentralen Längsachse der Düse orientiert sein und von dem Druckkopf weg orientiert sein. Die Düsenauslassrichtung bezeichnet eine Richtung, in der das Druckfluid aus dem Druckkopf hin zum Trägerkörper ausgestoßen wird. Die Düsenauslassrichtung kann auch als Druckrichtung bezeichnet werden.

Der Druckkopf auch als Durchflussdruckkopf bezeichnet werden. Während eines Druckvorganges kann somit Druckfluid durch den Druckkopfeinlass in den Druckkopf einströmen, wobei ein Teil des Druckfluids durch die mindestens eine Düse zum Drucken des Trägerkörpers in der Düsenauslassrichtung aus dem Druckkopf ausgestoßen wird und der verbleibende Teil des Druckfluids durch den Druckkopfauslass wieder aus dem Druckkopf ausströmt. Die mindestens eine Düse und der Druckkopfauslass können somit verschiedene Öffnungen des Druckkopfes ausbilden, durch die Druckfluid aus dem Druckkopf austreten kann. Insbesondere kann aber ein Strömungswiderstand der mindestens einen Düse größer als ein Strömungswiderstand des mindestens einen Druckkopfauslasses sein.

Weiter ist zumindest ein Teil des ersten Behälters, vorzugsweise der gesamte erste Behälter, in der Düsenauslassrichtung vor dem mindestens einen Druckkopfauslass angeordnet, insbesondere mit einem vorbestimmten Abstand. Insbesondere kann zumindest ein Teil des ersten Behälters vor der mindestens einen Düse angeordnet sein. Weiter insbesondere kann der erste Behälter derart angeordnet und/oder ausgebildet sein, dass unabhängig von einem Füllstand des ersten Behälters, eine Oberfläche des Druckfluids im ersten Behälter in der Düsenauslassrichtung vor dem mindestens einen Druckkopfauslass, insbesondere vor der mindestens einen Düse, angeordnet ist.

Dass zumindest ein Teil des ersten Behälters in der Düsenauslassrichtung vor dem mindestens einen Druckkopfauslass angeordnet ist bedeutet, dass der zumindest eine Teil des ersten Behälters unterhalb des mindestens einen Druckkopfauslasses angeordnet ist, wenn das Druckmodul derart angeordnet und/oder ausgerichtet wird, dass die Düsenauslassrichtung einer Gravitationsrichtung, also einer Richtung der Gravitationskraft, entspricht.

Dass zumindest ein Teil des ersten Behälters in der Düsenauslassrichtung vor dem mindestens einen Druckkopfauslass angeordnet ist, schließt hierbei aber nicht aus, dass zwischen Druckkopfauslass und dem ersten Behälter ein Versatz quer zur Düsenauslassrichtung existiert.

Weiter kann der zumindest eine Teil des ersten Behälters, insbesondere der Einlass des ersten Behälters, oder ein in Düsenauslassrichtung hintere Stirnseite des Behälters mit einem vorbestimmten Abstand entlang der Düsenauslassrichtung von dem mindestens einen Druckkopfauslass beabstandet angeordnet sein.

Der vorbestimmte Abstand kann auch als Höhenunterschied zwischen dem ersten Behälter und dem Druckkopf bezeichnet werden. Insbesondere kann erste Behälter auch derart angeordnet und/oder ausgebildet sein, dass unabhängig von einem Füllstand des ersten Behälters ein Minimalabstand entlang der Düsenauslassrichtung zwischen der Oberfläche des Druckfluids im ersten Behälter und dem mindestens einen Druckkopfauslass oder der mindestens einen Düse gegeben ist.

Der vorbestimmte Abstand entlang der Düsenauslassrichtung ist hierbei größer als 0mm. Bevorzugt ist der vorbestimmte Abstand größer als 10mm, weiter bevorzugt größer als 20mm. Insbesondere kann der vorbestimmte Abstand auch 50mm betragen.

Im Druckbetrieb kann das Druckfluid durch den Druckkopf und aus dem Druckkopf über mindestens ein fluidtechnisches Verbindungselement, beispielsweise eine Leitung oder einen Schlauch, in den ersten Behälter strömen. Der vorbestimmte Abstand ist hierbei insbesondere derart zu wählen, dass zumindest ein Teil des zwischen dem Druckkopfauslass und dem ersten Behälter, z.B. in einem fluidtechnischen Verbindungselement, vorhandenen Druckfluids aufgrund einer auf diesen Teil des Druckfluids wirkenden Gravitationskraft in den ersten Behälter und nicht in den Druckkopf strömt, insbesondere in dem Fall, dass die Energieversorgung des Druckmoduls ausfällt und somit das Druckfluid nicht mehr wie gewünscht gefördert werden kann.

Dieses in den ersten Behälter strömende Druckfluid kann jedoch im Druckkopf einen Unterdruck derart erzeugen, dass das im Druckkopf befindliche Druckfluid aus dem Druckkopf, insbesondere hin zum ersten Behälter, befördert wird. Auch in Strömungsrichtung vor dem Druckmodul befindliches Druckfluid kann auf diese Weise durch den Druckkopf in den ersten Behälter gesaugt werden. Hierdurch verringert sich in vorteilhafter Weise das Risiko, dass Druckfluid durch die mindestens eine Düse austritt und somit ein Druckbild in unerwünschter Weise beeinflusst.

Das Druckmodul kann weiter zumindest eine erste Einrichtung zur Erzeugung eines Fluidstroms, insbesondere eine Fördereinrichtung, beispielsweise eine Pumpeinrichtung, umfassen. Mittels der mindestens ersten Einrichtung zur Erzeugung eines Fluidstroms kann ein Fluidstrom durch den Druckkopf mit gewünschten Eigenschaften, beispielsweise einer gewünschten Strömungsrate, eingestellt werden. Auch kann der Fluidstrom mit einer vorbestimmten Durchflussrate oder Volumenrate eingestellt werden, beispielsweise in einem Bereich von 50 ml/min bis 150 ml/min, vorzugsweise 80-100 ml/min.

Wie nachfolgend noch näher erläutert, kann die Verbindung zwischen dem Druckkopfauslass und dem ersten Behälter Teil eines geschlossenen Fluidkreislaufes sein, wobei der Fluidkreislauf den Druckkopf und den mindestens ersten Behälter verbindet.

Weiter kann das Druckmodul zusätzlich einen weiteren Behälter aufweisen. Der Druckkopf ist über den Druckkopfeinlass mit dem weiteren Behälter, insbesondere fluidtechnisch, verbunden. Hierbei kann zumindest ein Teil des weiteren Behälters, vorzugsweise der gesamte weitere Behälter, in der Düsenauslassrichtung vor dem mindestens einen Druckkopfauslass und/oder vor dem mindestens einen Druckkopfeinlass, insbesondere mit einem vorbestimmten Abstand, angeordnet sein. Insbesondere kann zumindest ein Teil des weiteren Behälters vor der mindestens einen Düse angeordnet sein. Auch kann der weitere Behälter derart angeordnet und/oder ausgebildet sein, dass unabhängig von einem Füllstand des weiteren Behälters, eine Oberfläche des Druckfluids im weiteren Behälter in der Düsenauslassrichtung vor dem mindestens einen Druckkopfauslass und/oder dem mindestens einen Druckkopfeinlass, insbesondere vor der mindestens einen Düse, angeordnet ist. Insbesondere können der erste und der weitere Behälter mit gleichem Abstand in der Düsenauslassrichtung vor dem mindestens einen Druckkopfeinlass und/oder vor dem mindestens einen Druckkopfauslass angeordnet sein.

Der weitere Behälter kann hierbei als Vorratsbehälter bezeichnet werden. Hierbei kann Druckfluid aus dem weiteren Behälter, z.B. mittels der vorhergehend erläuterten mindestens einen Einrichtung zur Erzeugung eines Fluidstroms, hin zum Druckkopf gefördert werden, durch den Druckkopf strömen und dann aus dem Druckkopf in den ersten Behälter strömen. Bevorzugt sind der erste Behälter und der weitere Behälter fluidtechnisch verbindbar. Hierzu kann beispielsweise ein Einlass des weiteren Behälters fluidtechnisch mit einem Auslass des ersten Behälters verbindbar sein. Der erste und der weitere Behälter können hierbei fluidtechnisch verbunden oder über eine Trenneinrichtung, beispielsweise ein Ventil, verbindbar sein, wobei die Trenneinrichtung die fluidtechnische Verbindung zwischen dem ersten und dem weiteren Behälter herstellen oder trennen kann.

Weiter kann das Druckmodul eine weitere Einrichtung zur Erzeugung eines Fluidstroms, insbesondere eine weitere Fördereinrichtung, beispielsweise eine Pumpeinrichtung, aufweisen, wobei mittels der weiteren Einrichtung zur Erzeugung eines Fluidstroms Druckfluid aus dem ersten Behälter in den weiteren Behälter förderbar ist.

Hierdurch ergibt sich in vorteilhafter Weise eine einfache Realisierung des Druckmoduls, da das Druckfluid aus dem weiteren Behälter hin zum Druckkopf und aus dem Druckkopf hin zum ersten Behälter gefördert werden kann, wodurch in einfacher Weise ein gewünschter Fluidstrom einstellbar ist.

Weiter kann das Druckmodul mindestens eine erste Druckerzeugungseinrichtung umfassen. Mittels der Druckerzeugungseinrichtung kann ein vorbestimmter Druck, beispielsweise ein Überdruck oder ein Unterdruck insbesondere relativ zu einem atmosphärischen Druck erzeugt, werden.

Weiter ist mittels der ersten Druckerzeugungseinrichtung ein Druck zumindest im ersten Behälter einstellbar. Vorzugsweise kann mittels der ersten Druckerzeugungseinrichtung ein Vakuum im ersten Behälter erzeugt werden. Jedoch ist auch vorstellbar, dass mittels der ersten Druckerzeugungseinrichtung ein vorbestimmtes Druckniveau, beispielsweise ein vorbestimmter Überdruck oder ein vorbestimmter Unterdruck insbesondere relativ zu einem atmosphärischen Druck einstellbar ist. Wird im ersten Behälter mittels der ersten Druckerzeugungseinrichtung beispielsweise ein niedrigerer Druck als im Druckkopf eingestellt, so wird Druckfluid aus dem Druckkopf auch aufgrund dieses im ersten Behälter bereitgestellten Druckes angesaugt. Fällt eine Energieversorgung des Druckmoduls und somit auch der ersten Druckerzeugungseinrichtung aus, so kann der im ersten Behälter zum Zeitpunkt des Ausfalls eingestellte Druck über eine vorbestimmte Zeitdauer abgebaut werden. Somit kann während dieser vorbestimmten Zeitdauer jedoch weiterhin eine Saugkraft auf das im Druckkopf befindliche Druckfluid ausgeübt werden. Dies unterstützt in vorteilhafter Weise den gewünschten Abtransport des Druckfluids aus dem Druckkopf, insbesondere im Fall einer ausfallenden Energieversorgung.

Weiter kann mittels der ersten Druckerzeugungseinrichtung zusätzlich ein Druck im weiteren Behälter einstellbar sein. Hierbei kann die erste Druckerzeugungseinrichtung sowohl mit dem ersten und dem weiteren Behälter koppelbar sein. Selbstverständlich kann das Druckmodul in diesem Fall geeignete Steuerelemente, beispielsweise Ventile, umfassen, mittels derer, vorzugsweise unabhängig voneinander, der Druck im ersten als auch im weiteren Behälter durch die Druckerzeugungseinrichtung eingestellt werden kann.

Alternativ oder kumulativ umfasst das Druckmodul eine weitere Druckerzeugungseinrichtung. Auch die weitere Druckerzeugungseinrichtung kann hierbei einen Überdruck oder einen Unterdruck insbesondere relativ zu einem atmosphärischen Druck erzeugen. Weiter ist mittels der weiteren Druckerzeugungseinrichtung ein Druck im weiteren Behälter einstellbar.

Insbesondere kann der Druck im ersten Behälter unabhängig von dem Druck im weiteren Behälter einstellbar sein. Hierdurch kann zwischen den Drücken im ersten und im weiteren Behälter eine bestimmte Druckdifferenz eingestellt werden. Diese kann zeitlich konstant oder zeitlich variabel eingestellt werden. Vorzugsweise ist im weiteren Behälter ein höherer Druck als im ersten Behälter einstellbar. Die hierdurch bereitgestellte Druckdifferenz zwischen dem weiteren und dem ersten Behälter kann in vorteilhafter Weise den vorhergehend erläuterten Fluidstrom durch den Druckkopf erzeugen und/oder unterstützen. Durch die Einstellung des absoluten Drucks im ersten und/oder weiteren Behälter und/oder durch die Einstellung der Druckdifferenz kann mindestens eine Eigenschaft des Fluidstroms des Druckfluids, z.B. eine Durchflussrate, auf eine gewünschte Eigenschaft, insbesondere aktiv, eingestellt werden. Somit ist zur Einstellung der mindestens einen Eigenschaft des Fluidstroms keine Flüssigkeitspumpe notwendig. Dieses führt zu einem besonders wartungsarmen und verschleißarmen System.

Insbesondere kann die Differenz zwischen dem Druck im weiteren Behälter und dem Druck im ersten Behälter derart eingestellt werden, dass eine vorbestimmte Druckdifferenz zwischen einem Druck am Druckkopfeinlass und einem Druck am Druckkopfauslass bereitgestellt wird. Dies wird nachfolgend näher erläutert.

Die erste und/oder die weitere Druckerzeugungseinrichtung kann/können hierbei die vorhergehend erläuterte Einrichtung zur Erzeugung eines Fluidstroms oder eine bzw. mehrere weitere Einrichtung(en) zur Erzeugung eines Fluidstroms bereitstellen.

Weiter kann das Druckmodul mindestens eine Einlassvorrichtung zur Einführung von zusätzlichem Druckfluid umfassen. Hierbei bezeichnet zusätzliches Druckfluid eine Menge an Druckfluid, die zusätzlich zu dem in dem Fluidsystem vorhandenen Druckfluid in das Fluidsystem eingeführt werden kann, wobei das Fluidsystem den ersten Behälter, den Druckkopf und gegebenenfalls den weiteren Behälter sowie die entsprechenden fluidtechnischen Verbindungselemente umfassen kann.

Die Einlassvorrichtung ist mit dem Einlass des ersten Behälters und/oder mit dem Einlass des weiteren Behälters verbindbar. Vorzugsweise ist die Einlassvorrichtung mit dem Einlass des ersten Behälters verbindbar. Selbstverständlich kann die Einlassvorrichtung aber auch mit anderen Teilen oder Elementen des Fluidsystems verbindbar sein.

Weiter kann das Druckmodul ein Fluidschaltelement umfassen, wobei mittels des Fluidschaltelements entweder die Einlassvorrichtung mit dem Einlass des ersten Behälters oder der Druckkopfauslass mit dem Einlass des ersten Behälters verbindbar ist. Auch kann das Druckmodul ein Fluidschaltelement umfassen, wobei mittels des Fluidschaltelements entweder der Druckkopfauslass oder die Einlassvorrichtung mit dem Einlass des ersten Behälters oder sowohl die Einlassvorrichtung als auch der Druckkopfauslass mit dem Einlass des ersten Behälters verbindbar ist. Ein solches Fluidschaltelement kann beispielsweise als Ventil, insbesondere als Wechselventil, ausgebildet sein.

Hierdurch ergibt sich in vorteilhafter Weise, dass das Druckfluid in das Fluidsystem nachgefüllt werden kann. Bei einer Verbindung mit dem ersten Behälter ergibt sich in weiter vorteilhafter Weise, dass aufgrund eines im ersten Behälter einstellbaren Unterdrucks das Druckfluid durch die Einlassvorrichtung ohne zusätzlichen Einführdruck eingeführt werden kann.

Weiter kann das Druckmodul mindestens einen Drucksensor zur Erfassung eines Fluiddrucks im Fluidsystem umfassen. Vorzugsweise kann der mindestens eine Drucksensor einen Fluiddruck am Druckkopfeinlass oder am Druckkopfauslass erfassen. Besonders vorzugsweise kann das Druckmodul zwei Drucksensoren umfassen, wobei ein erster Drucksensor den Fluiddruck am Druckkopfeinlass und ein weiterer Drucksensor den Fluiddruck am Druckkopfauslass erfasst.

In Abhängigkeit des durch den mindestens einen Drucksensor erfassten Fluiddrucks kann in vorteilhafter Weise ein gewünschter Fluiddruck, insbesondere eine gewünschte Druckdifferenz zwischen Druckkopfeinlass und Druckkopfauslass, eingestellt werden. Der gewünschte Fluiddruck bzw. die gewünschte Fluiddruckdifferenz kann beispielsweise derart gewählt werden, dass ein Fluidstrom mit gewünschten Eigenschaften, beispielsweise einer gewünschten Strömungsrate, durch den Druckkopf erzeugt wird.

Beispielsweise kann das Druckmodul eine Steuereinrichtung umfassen, wobei die Steuereinrichtung in Abhängigkeit des von dem mindestens einen Drucksensor erfassten Fluiddrucks die mindestens eine Einrichtung zur Erzeugung eines Fluidstroms im Fluidsystem derart steuert, dass ein Fluidstrom mit gewünschten Eigenschaften erzeugt wird. Beispielsweise kann die Steuereinrichtung die vorhergehend erläuterte erste Druckerzeugungseinrichtung und/oder die weitere Druckerzeugungsvorrichtung und/oder die vorhergehend erläuterten Einrichtungen zur Erzeugung eines Fluidstroms ansteuern.

Selbstverständlich kann das Druckmodul auch eine weitere Steuereinrichtung umfassen, die den vorhergehend erläuterten Ausstoß von Druckfluid durch die mindestens eine Düse steuert.

Weiter kann das Druckmodul mindestens eine Aufnahmeeinrichtung für mindestens ein Abstützelement aufweisen. Eine Aufnahmeeinrichtung kann beispielsweise eine Befestigungseinrichtung sein, wobei die Befestigungseinrichtung eine Einrichtung zur Herstellung einer mechanischen Verbindung eines Druckmoduls mit dem Abstützelement bezeichnet. Die mechanische Verbindung ist insbesondere eine lösbare mechanische Verbindung. Weiter kann die mechanische Verbindung eine form- und/oder kraftschlüssige Verbindung sein. Vorstellbar sind z.B. Rastverbindungen, Klemmverbindungen, Schraubverbindungen und weitere, insbesondere lösbare, mechanische Verbindungen. Alternativ oder kumulativ kann eine Aufnahmeeinrichtung eine Ausrichteinrichtung sein, wobei eine Ausrichteinrichtung ein Element zur Herstellung einer vorbestimmten Position und/oder Orientierung bezeichnen kann. Beispielsweise kann eine Ausrichteinrichtung als Führungsloch oder Anlagefläche oder Kerbe ausgebildet sein.

Alternativ oder kumulativ kann das Druckmodul das mindestens eine Abstützelement aufweisen. In diesem Fall kann das mindestens eine Abstützelement an dem Druckmodul, insbesondere einem Gehäuse des Druckmoduls, befestigt sein. Insbesondere kann das Abstützelement beweglich, insbesondere schwenkbar, an dem Druckmodul befestigt sein.

Das mindestens eine Abstützmodul ist hierbei derart an dem Druckmodul anordenbar, dass das Druckmodul, insbesondere stabil, auf einer, insbesondere ebenen, Absetzfläche absetzbar ist. Insbesondere kann das Druckmodul derart auf der Absatzfläche absetzbar sein, dass die Düsenauslassrichtung zumindest einen Anteil aufweist, der senkrecht zur Absetzfläche orientiert ist. Bevorzugt ist die Düsenauslassrichtung im abgesetzten Zustand vollständig senkrecht zur Absetzfläche orientiert. In diesem Fall kann das mindestens eine Abstützelement derart an dem Druckmodul anordenbar sein, dass zumindest ein Teil des ersten Behälters, vorzugsweise der gesamte erste Behälter, im abgesetzten Zustand in Düsenauslassrichtung vor dem mindestens einen Druckkopfauslass angeordnet ist.

Selbstverständlich kann das Druckmodul mehrere Aufnahmeeinrichtungen für mehrere Abstützelemente aufweisen oder mehrere Abstützelemente aufweisen. Hierdurch kann in vorteilhafter Weise das Druckmodul aus einer vorgeschlagenen Vorrichtung entnommen und mittels des mindestens einen Abstützelements sicher gelagert werden, wobei sich durch die beschriebene Ausführungsform weiter in vorteilhafter Weise ergibt, dass Druckfluid auch im abgesetzten Zustand aus dem Druckkopf in den ersten Behälter strömen kann und nicht in unerwünschter Weise durch die mindestens eine Düse austritt.

Weiter kann das Druckmodul mindestens Aufnahmeelement zur Aufnahme des Druckmoduls an einer Trägereinrichtung aufweisen.

Weiter kann/können der erste und/oder der weitere Behälter des Druckmoduls jeweils einen weiteren Anschluss für Frischluftzufuhr in die Behälter fassen. Der erste und/oder weitere Behälter kann/können hierbei fest im Druckmodul installiert oder auswechselbar sein.

Weiter kann eine Position des ersten Behälters und/oder des weiteren Behälters in einer Richtung parallel zur Düsenauslassrichtung verstellbar sein. Beispielsweise können die Behälter bewegbar gelagert sein. Beispielsweise kann/können der erste Behälter und/oder der weitere Behälter nur an vorbestimmte, diskrete Positionen oder aber kontinuierlich parallel zur Düsenauslassrichtung bewegbar sein, wobei der Behälter nach der Bewegung am Druckmodul festlegbar ist. Auch kann die Position des ersten und/oder des weiteren Behälters aktorgestützt verstellbar sein. Hierdurch kann, wie vorhergehend erläutert, ein Abstand zwischen dem mindestens einen Druckkopfauslass und dem Behälter eingestellt werden, wodurch wiederum Eigenschaften des Abtransports von Druckfluid aus dem Druckkopf aufgrund der Änderung des hydrostatischen Druckes beeinflusst werden können.

Weiter kann das Druckmodul oder ein Funktionsmodul ein oder mehrere Steuereinrichtung umfassen, insbesondere zur Steuerung des Fluidstroms und/oder zur Steuerung des Druckvorgangs, insbesondere des Druckfluidausstoß aus der mindestens einen Düse.

Weiter kann ein Druckmodul oder ein Funktionsmodul eine Anzeigeeinrichtung und/oder eine Bedieneinrichtung umfassen, beispielsweise zur Anzeige eines Füllstandes des ersten und/oder des weiteren Behälters. Selbstverständlich können mittels der Anzeigeeinrichtung auch weitere Informationen, beispielsweise Statusmeldungen und/oder Fehlermeldungen angezeigt werden.

Weiter kann das Druckmodul oder ein Funktionsmodul mindestens eine Kommunikationsschnittstelle, beispielsweise eine drahtgebundene oder drahtlose Kommunikationsschnittstelle aufweisen. Über die Kommunikationsschnittstelle kann das Druckmodul, insbesondere eine Steuereinrichtung des Druckmoduls, mit einer übergeordneten Steuereinrichtung kommunizieren. Beispielsweise können Druckdaten an das Druckmodul übertragen werden. Weiter kann ein Druckmodul auch mindestens eine Speichereinrichtung für Druckdaten aufweisen.

Um einen einfachen und schnellen Austausch der Funktionsmodule zu ermöglichen, können die Aufnahmeelemente derart ausgebildet sein, dass nach dem Befestigen des Funktionsmoduls an der Trägereinrichtung die Position und Ausrichtung des Funktionsmoduls ausreichend exakt eingestellt ist. Beispielsweise kann im befestigten Zustand eine Abweichung von einer gewünschten Position auf eine maximale Abweichung von ± 50 µm, besonders bevorzugt von ± 25 µm, ganz besonders bevorzugt von ± 5 µm beschränkt sein. Die Abweichung kann hierbei eine Abweichung in der ersten und/oder zweiten und/oder dritten Raumrichtung sein.

Es ist jedoch auch möglich, dass die in der dritten Raumrichtung im befestigten Zustand auftretende Abweichung von einer gewünschten Position auf eine maximale Abweichung von ± 500 µm, besonders bevorzugt von ± 100 µm, ganz besonders bevorzugt von ± 50 µm beschränkt ist. Eine funktionelle Einheit des Funktionsmoduls, beispielsweise ein Druckkopf, kann hierbei werkseitig im Funktionsmodul installiert, insbesondere positioniert, sein, sodass nach einem Funktionsmodulwechsel keine Justage der funktionellen Einheit mehr notwendig ist.

Weiter vorgeschlagen wird ein Verfahren zum Herstellen einer Vorrichtung zum Herstellen eines Wert- und/oder Sicherheitsdokuments, insbesondere einer Vorrichtung gemäß einer der vorhergehend erläuterten Ausführungsformen.

Hierbei wird mindestens eine Trägereinrichtung bereitgestellt, die Aufnahmeelemente zum Befestigen und/oder Ausrichten der vorbestimmten Anzahl von Funktionsmodulen aufweist oder ausbildet. Die Aufnahmeelemente sind derart angeordnet und/oder ausgebildet, dass mehrere Funktionsmodule in einer beliebigen Reihenfolge, insbesondere austauschbar, an der Trägereinrichtung befestigbar, in anderen Worten festlegbar, sind. Weiter wird mindestens ein Funktionsmodul bereitgestellt und mittels zumindest einem Teil der Aufnahmeelemente in einer vorbestimmten Position und/oder mit einer vorbestimmten Ausrichtung an der Trägereinrichtung befestigt. Insbesondere kann das mindestens eine Funktionsmodul ein Druckmodul, insbesondere ein Druckmodul gemäß der vorhergehenden Erläuterungen, sein.

Hierdurch ergibt sich in vorteilhafter Weise, dass eine Vorrichtung zum Herstellen eines Wert- und/oder Sicherheitsdokuments in ihrer Ausbildung an die zur Herstellung einer bestimmten Art von Wert- und/oder Sicherheitsdokumenten notwendigen Verfahrensschritte angepasst werden kann. Insbesondere kann somit eine modular bestückbare Vorrichtung bereitgestellt werden.

In einer bevorzugten Ausführungsform werden mehrere Funktionsmodule mit vorbestimmten Positionen und/oder mit vorbestimmten Ausrichtungen, insbesondere jedoch gleichen Ausrichtungen, in einer gewünschten Reihenfolge, insbesondere entlang der vorhergehend erläuterten ersten Raumrichtung, an der Trägereinrichtung befestigt. Beispielsweise können verschiedene Druckmodule, mindestens ein Heizmodul und mindestens ein Strahlungsmodul an der Trägereinrichtung befestigt werden. Die Reihenfolge sowie die Funktion und die Anzahl der Funktionsmodule kann hierbei in Abhängigkeit der zur Herstellung des Wert- und/oder Sicherheitsdokuments notwendigen Verfahrensschritte und in Abhängigkeit der zur Herstellung benötigten Reihenfolge der Verfahrensschritte gewählt werden. Mögliche Funktionalitäten der Funktionsmodule, beispielsweise ein Bedrucken, ein Heizen oder eine Oberflächen(vor)behandlung, wurden vorhergehend erläutert.

Weiter vorgeschlagen wird ein Verfahren zum Herstellen eines Wert- und/oder Sicherheitsdokuments, wobei ein Wert- und/oder Sicherheitsdokument mittels einer Vorrichtung gemäß einer der vorhergehend erläuterten Ausführungsformen hergestellt wird. Hierbei wird das (herzustellende) Wert- und/oder Sicherheitsdokument auf oder an einer Positioniereinrichtung angeordnet, wobei die Positioniereinrichtung in mindestens einer ersten Raumrichtung relativ zu mindestens einem Funktionsmodul, insbesondere zu mehreren Funktionsmodulen, welches mittels zumindest einem Teil der Aufnahmeelemente an der Trägereinrichtung befestigt ist, bewegt wird. Weiter führt das mindestens eine Funktionsmodul zumindest einen Teilschritt des Verfahrens durch. Insbesondere kann das mindestens eine Funktionsmodul ein Druckfluid auf das (herzustellende) Wert- und/oder Sicherheitsdokument aufbringen.

Ist das mindestens eine Funktionsmodul als Druckmodul ausgebildet, so kann, insbesondere in einem Teilschritt des Verfahrens zur Herstellung, ein Verfahren zum Bedrucken eines Trägerkörpers, insbesondere eines Trägerkörpers eines Wert- und/oder Sicherheitsdokuments, durchgeführt werden. Hierbei strömt ein Druckfluid, insbesondere aus einem weiteren Behälter, durch einen Druckkopfeinlass in mindestens einen Druckkopf, wobei ein Teil des Druckfluids hin zum Trägerkörper durch mindestens eine Düse in einer Düsenauslassrichtung aus dem Druckkopf ausgestoßen wird, wobei das Druckfluid, insbesondere der verbleibende Teil des Druckfluids, durch einen Druckkopfauslass in einen ersten Behälter strömt. Weiter ist zumindest ein Teil des ersten Behälters, vorzugsweise der gesamte erste Behälter, in der Düsenauslassrichtung vor dem mindestens einen Druckkopfauslass angeordnet.

Weiter kann eine vorbestimmte Druckdifferenz zwischen einem Druck an dem Druckkopfeinlass und einem Druck an dem Druckkopfauslass eingestellt werden. Hierdurch kann in vorteilhafter Weise ein gewünschter Meniskusdruck, also ein Druck an der mindestens einen Düse, eingestellt werden. Zur Einstellung der Druckdifferenz kann beispielsweise ein vorbestimmter Druck im ersten Behälter und/oder ein vorbestimmter Druck im weiteren Behälter eingestellt werden. Diese(r) kann/können beispielsweise derart eingestellt werden, dass sich die gewünschte Druckdifferenz am Druckkopf ergibt.

Weiter kann ein Druck an dem Druckkopfeinlass in Abhängigkeit eines gewünschten Meniskusdrucks und/oder in Abhängigkeit eines Abstands zwischen dem mindestens einen Druckkopfauslass und dem ersten Behälter in Düsenauslassrichtung eingestellt werden. Hierbei kann der Druck an dem Druckkopfeinlass insbesondere in Abhängigkeit eines Abstands, insbesondere eines minimalen, mittleren oder maximalen Abstands, zwischen dem ersten Behälter, insbesondere einer Oberfläche des Druckfluids im ersten Behälter, und dem Druckkopfauslass oder der mindestens einen Düse, eingestellt werden. Ein Füllstand, also eine Lage der Oberfläche des Druckfluids, des ersten und/oder des weiteren Behälters kann hierbei, insbesondere sensorisch, erfasst werden. Hierzu kann ein Druckmodul mindestens eine Einrichtung zur Erfassung eines Füllstands aufweisen.

Weiter alternativ oder kumulativ kann der Druck an dem Druckkopfeinlass in Abhängigkeit einer gewünschten Druckdifferenz zwischen dem Druck am Druckkopfeinlass und dem Druck am Druckkopfauslass eingestellt werden. Hierdurch kann beispielsweise eine gewünschte Eigenschaft eines Fluidstroms durch den Druckkopf eingestellt werden.

In bevorzugter Weise können der Druck am Druckkopfeinlass und am Druckkopfauslass erfasst werden, wobei der Druck im ersten und/oder weiteren Behälter derart eingestellt werden kann, dass ein gewünschter Druck am Druckkopfeinlass und/oder Druckkopfauslass und/oder eine gewünschte Druckdifferenz vorliegt. Dieses hat den Vorteil, dass Drücke messtechnisch einfach zu erfassen sind und der Füllstand der Behälter keinen unmittelbaren Einfluss hat.

Der Druck an dem Druckkopfeinlass kann insbesondere durch einen Druck im weiteren Behälter eingestellt werden. Beispielsweise kann der Druck im weiteren Behälter derart eingestellt werden, dass ein gewünschter Druck an dem Druckkopfeinlass bereitgestellt wird. Der Druck an dem Druckkopfeinlass sollte insbesondere derart bereitgestellt werden, dass in einem normalen Druckbetrieb der gewünschte Meniskusdruck bereitgestellt werden kann, wobei gleichzeitig der sich aufgrund des Abstandes zwischen dem mindestens einen Druckkopfauslass und dem ersten Behälter ergebende negative Druck, der auf das im Druckkopf vorhandene Druckfluid wirkt, kompensiert wird.

Die vorhergehend erläuterte Druckdifferenz zwischen dem Druck an dem Druckkopfeinlass und dem Druck an dem Druckkopfauslass kann insbesondere derart eingestellt werden, dass sich eine gewünschte Durchflussrate, beispielsweise 80-100 ml/min, durch den Druckkopf ergibt. Selbstverständlich können auch andere Durchflussraten eingestellt werden, insbesondere Durchflussraten abhängig von gewünschten Betriebsparametern des Druckkopfes.

Weiter kann zusätzliches Druckfluid durch eine Einlassvorrichtung in das Fluidsystem, insbesondere in den ersten Behälter und/oder in den weiteren Behälter eingebracht werden. Weiter kann Druckfluid aus dem ersten Behälter in den weiteren Behälter gefördert werden, beispielsweise während Druckpausen.

Die Erfindung wird anhand eines Ausführungsbeispiels näher erläutert. Die Figuren zeigen:
- Fig. 1: einen schematischen Querschnitt durch eine vorgeschlagene Vorrichtung,
- Fig. 2: eine perspektivische Ansicht eines Druckmoduls,
- Fig. 3: eine perspektivische Ansicht einer vorgeschlagenen Vorrichtung und
- Fig. 4: eine perspektivische Ansicht einer weiteren vorgeschlagenen Vorrichtung.

Nachfolgend bezeichnen gleiche Bezugszeichen Elemente mit gleichen oder ähnlichen technischen Merkmalen.

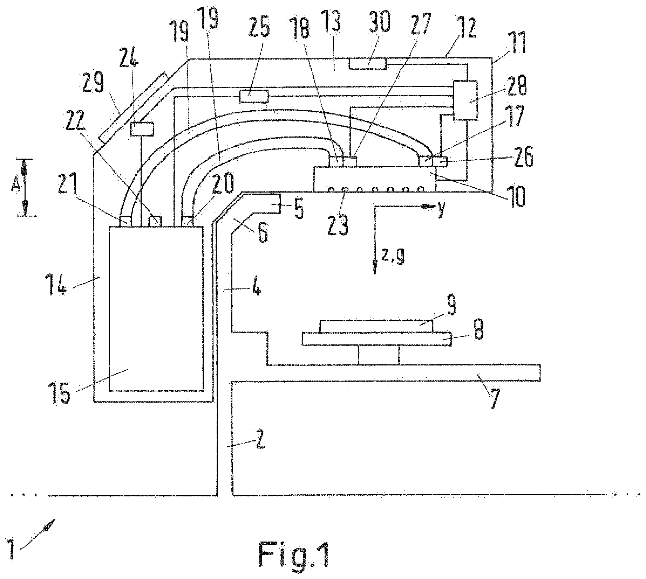

In Fig. 1 ist ein schematischer Querschnitt durch eine erfindungsgemäße Vorrichtung 1 dargestellt. Die Vorrichtung 1 umfasst eine Trägereinrichtung 2, insbesondere eine ortsfest angeordnete Trägereinrichtung 2. Die Trägereinrichtung 2 weist insbesondere einen sich in vertikaler Richtung z erstreckenden ersten Aufnahmeabschnitt 4 und einen sich in einer lateralen Richtung y erstreckenden weiteren Aufnahmeabschnitt 5 auf, wobei der erste und der weitere Aufnahmeabschnitt 4, 5 an einem freien Ende des ersten Aufnahmeabschnitts 4 über einen Verbindungsabschnitt 6 verbunden sind, der sich schräg zum ersten und weiteren Aufnahmeabschnitt 4, 5 erstreckt und mit diesen jeweils einen vorbestimmten Winkel, beispielsweise 45°, einschließt.

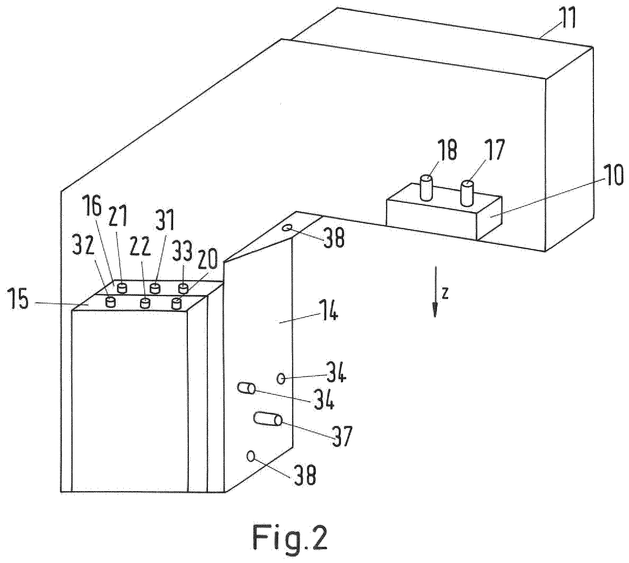

Weiter weist die Trägereinrichtung 2 einen weiteren Halteabschnitt 7 auf, der an dem ersten Aufnahmeabschnitt 4 befestigt ist und sich im Wesentlichen in der lateralen Richtung y weg von dem ersten Aufnahmeabschnitt 4 erstreckt. Auf dem weiteren Halteabschnitt 7 ist ein Verschiebeschlitten 8 beweglich gelagert, wobei der Verschiebeschlitten 8 in und entgegen der lateralen Richtung y und in und entgegen einer longitudinalen Richtung x (siehe Fig. 2) bewegbar ist. Die longitudinale Richtung x kann hierbei senkrecht zur lateralen Richtung y und zu einer vertikalen Richtung z orientiert sein.

Die vertikale Richtung z ist hierbei in Gravitationsrichtung orientiert, wobei die Gravitationsrichtung einer Richtung der Gravitationskraft g entspricht. Somit ist die vertikale Richtung z von oben nach unten orientiert. Auf dem Verschiebeschlitten 8 ist ein Trägerkörper 9 angeordnet, insbesondere ein kartenförmiger Trägerkörper 9, aus dem durch die Vorrichtung 1 ein Wert- und/oder Sicherheitsdokument hergestellt wird. Mittels des Verschiebeschlittens 8 ist der Trägerkörper 9 relativ zu einem Druckkopf 10 eines als Druckmodul 11 ausgebildeten Funktionsmoduls bewegbar.

Das Druckmodul 11 ist hierbei mit einer vorbestimmten Orientierung und Position an der Trägereinrichtung 2 befestigt. Hierfür weisen das Druckmodul 11 und die Trägereinrichtung 2, insbesondere der erste und der weitere Aufnahmeabschnitt 4, 5, korrespondierende Aufnahmeelemente (nicht in Fig. 1 dargestellt) auf, wobei mittels der Aufnahmeelemente das Druckmodul 11 mit der gewünschten Orientierung und Position an der Trägereinrichtung 2 befestigbar und/oder ausrichtbar ist. Insbesondere ist das Druckmodul 11 derart an der Trägereinrichtung 2 festgelegt, dass eine Düsenauslassrichtung, also eine Richtung in der Druckfluid aus dem Druckkopf hin zum Trägerkörper 9 ausgestoßen oder ausgestrahlt wird, parallel zur vertikalen Richtung z orientiert ist.

Das Druckmodul 11 weist ein im Wesentlichen L-förmiges Gehäuse 12 mit einem ersten Abschnitt 13 und einem weiteren Abschnitt 14 auf, wobei eine zentrale Längsachse des ersten Abschnitts 13 senkrecht zu einer zentralen Längsachse des weiteren Abschnitts 14 orientiert ist. Hierbei ist die zentrale Längsachse des ersten Abschnitts 13 parallel zur lateralen Richtung y und die zentrale Längsachse des weiteren Abschnitts 14 parallel zur vertikalen Richtung z orientiert. Eine Seitenfläche des weiteren Abschnitts 14 des Gehäuses 12 liegt an einer Seitenfläche des ersten Aufnahmeabschnitts 4 der Trägereinrichtung 2 an. Auch liegt ein weiterer Abschnitt einer Unterseite des ersten Abschnitts 13 des Gehäuses 12 auf einer Oberfläche des weiteren Aufnahmeabschnitts 5 auf. Ebenfalls liegt eine Seitenfläche eines Verbindungsabschnitts zwischen dem ersten Abschnitt 13 und dem weiteren Abschnitt 14 des Gehäuses 12 an einer Seitenfläche des Verbindungsabschnitts 6 der Trägereinrichtung 2 an.

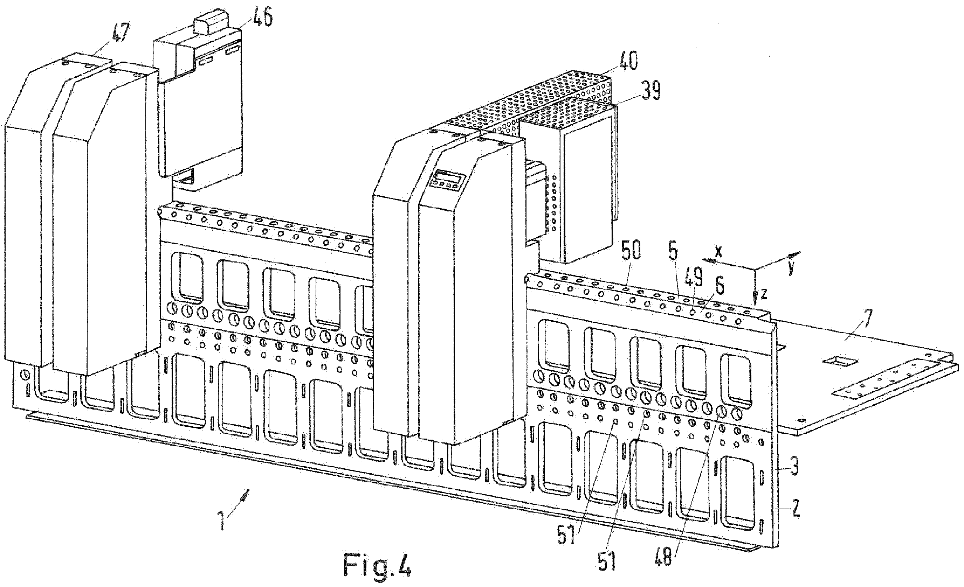

Das Druckmodul 11 umfasst einen ersten Behälter 15 für Druckfluid DF (siehe Fig. 4). Weiter umfasst das Druckmodul 11 den Druckkopf 10. Nicht in Fig. 1 dargestellt ist ein weiterer Behälter 16 des Druckmoduls 11 (siehe z.B. Fig. 2).

Der Druckkopf 10 weist einen Druckkopfeinlass 17 und einen Druckkopfauslass 18 auf. Der Druckkopfauslass 18 ist über einen Schlauch 19 mit einem Einlass 20 des ersten Behälters 15 fluidtechnisch verbunden. Weiter ist der Druckkopfeinlass 17 über einen Schlauch 19 mit einem Auslass 21 des weiteren Behälters 16 fluidtechnisch verbunden. Weiter dargestellt ist ein Einlass 22 des ersten Behälters 15 für Frischluft.

Der Druckkopf 10 weist weiter Düsen 23 auf, durch die Druckfluid DF in einer Düsenauslassrichtung, die der vertikalen Richtung z entspricht, aus dem Druckkopf 10 hin zum Trägerkörper 9 ausstoßbar ist.

Weiter ist dargestellt, dass der erste Behälter 15, insbesondere der Einlass 20 des ersten Behälters 15, in der Düsenauslassrichtung z vor dem mindestens einen Druckkopfauslass 18, insbesondere auch vor den Düsen 23, angeordnet ist. Ein Abstand zwischen dem Einlass 20 und dem Druckkopfauslass 18 kann beispielsweise als ein Abstand A zwischen oberen Stirnflächen des Einlasses 20 und des Druckkopfauslasses 18 bestimmt werden.

Somit ist der erste Behälter 15 und insbesondere das sich im ersten Behälter 15 befindliche Druckfluid DF auf einem niedrigeren Höhenniveau angeordnet als das sich im Druckkopf 10 befindliche Druckfluid DF.

Fällt eine Energieversorgungseinrichtung des Druckmoduls 11, insbesondere von Druckerzeugungseinrichtungen 24, 25, aus, so strömt zumindest ein Teil des im Schlauch 19 zwischen Druckkopfauslass 18 und Einlass 20 des ersten Behälters 15 befindlichen Druckfluids DF aufgrund des Abstandes bzw. des Höhenunterschieds in den Druckbehälter 15. Hierdurch wird aber gleichzeitig das noch im Druckkopf 10 befindliche Druckfluid DF aus dem Druckkopf 10 abgesaugt und somit abtransportiert. Zusätzlich kann auch das noch im Schlauch 19 zwischen dem Auslass 21 des weiteren Druckbehälters 16 und dem Druckkopfeinlass 17 vorhandene Druckfluid DF durch den Druckkopf 10 in Richtung des ersten Behälters 15 gesaugt werden. Insbesondere können Druckkopfeinlass 17, Druckkopfauslass 18, Einlass 20 des ersten Behälters und/oder der Auslass 21 des weiteren Behälters 16 derart dimensioniert sein, dass ein Strömungswiderstand dieser Elemente geringer ist als ein Strömungswiderstand der die Düsen 23. Somit wird das Druckfluid DF nicht aus den Düsen 23 austreten, sondern in den ersten Behälter 15 strömen. Dies verhindert in vorteilhafter Weise ein ungewolltes Austreten von Druckfluid DF aus den Düsen 23.

Weiter umfasst das Druckmodul 11 eine erste Druckerzeugungseinrichtung 24, die mit dem ersten Behälter 15 gekoppelt ist und einen ersten Druck im ersten Behälter 15 erzeugen kann. Weiter umfasst das Druckmodul 11 eine weitere Druckerzeugungseinrichtung 25, die mit dem weiteren Behälter 16 gekoppelt ist und mittels derer ein weiterer Druck im weiteren Behälter 16 einstellbar ist.

Weiter umfasst das Druckmodul einen ersten Drucksensor 26 und einen weiteren Drucksensor 27, wobei mittels des ersten Drucksensors 26 ein Druck am Druckkopfeinlass 17 und mittels des weiteren Drucksensors 27 ein Druck am Druckkopfauslass 18 erfassbar ist.

Weiter umfasst das Druckmodul 11 eine Steuereinrichtung 28, die daten- und/oder signaltechnisch mit den Druckerzeugungseinrichtungen 24, 25, den Drucksensoren 26, 27 und mit dem Druckkopf 10 verbunden ist. In Abhängigkeit der durch die Drucksensoren 26, 27 erfassten Drücke, insbesondere in Abhängigkeit einer Druckdifferenz zwischen dem Druck am Druckkopfeinlass 17 und dem Druck am Druckkopfauslass 18, kann die Steuereinrichtung 28 die Druckerzeugungseinrichtungen 24, 25 derart steuern, dass eine gewünschte Druckdifferenz zwischen Druck am Druckkopfeinlass 17 und Druck am Druckkopfauslass 18 eingestellt wird und, insbesondere am Druckkopfeinlass 17, ein gewünschter absoluter Druck eingestellt wird.

Weiter umfasst das Druckmodul 11 eine Anzeigeeinrichtung 29, die ebenfalls daten- und/oder signaltechnisch mit der Steuereinrichtung 28 verbunden sein kann. Auf der Anzeigeeinrichtung 29 können beispielsweise Statusmeldungen des Druckmoduls 11, z.B. ein Füllstand einer der Behälter 15, 16, eine Information über eine Farbe oder Art des Druckfluids DF oder eine Fehlermeldung angezeigt werden.

Weiter umfasst das Druckmodul 11 eine Kommunikationsschnittstelle 30, die ebenfalls daten- und/oder signaltechnisch mit der Steuereinrichtung 28 verbunden sein kann.

In Fig. 2 ist eine perspektivische Ansicht eines Druckmoduls 11 dargestellt. Dargestellt ist, dass das Druckmodul 11 einen Druckkopf 10 mit einem Druckkopfeinlass 17 und einem Druckkopfauslass 18 umfasst. Ebenfalls dargestellt ist, dass das Druckmodul 11 einen ersten Behälter 15 und einen weiteren Behälter 16 umfasst. Weiter dargestellt ist ein Einlass 20 des ersten Behälters 15 und ein Auslass 21 des weiteren Behälters 16.

Auch der weitere Behälter 16 umfasst einen Einlass 31 für Frischluft. Weiter dargestellt ist, dass der erste Behälter 15 einen Auslass 32 aufweist, der fluidtechnisch mit einem Einlass 33 des weiteren Behälters 16 verbindbar sein kann. Hierdurch kann Druckfluid aus dem ersten Behälter 15 in den weiteren Behälter 16 gefördert werden. In Fig. 2 sind fluidtechnische Verbindungen, beispielsweise über Schläuche 19 (siehe Fig. 1) nicht dargestellt.

In Fig. 2 ist weiter dargestellt, dass eine Seitenfläche des ersten Abschnitts 14 des Druckmoduls 11 Aufnahmeöffnungen 34 für Abstützfüße aufweist. In die Aufnahmeöffnungen 34 kann zumindest ein Teil eines Abstützfußes eingeführt werden, wobei das Druckmodul 11 mittels der Abstützfüße auf einer Absetzfläche absetzbar und stabil lagerbar ist.

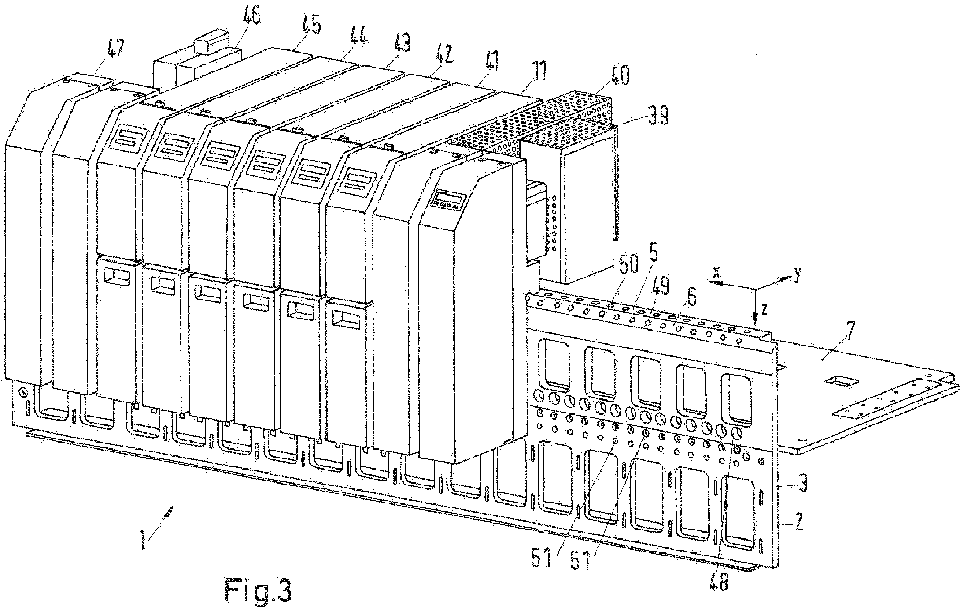

Weiter ist dargestellt, dass im Bereich der Seitenfläche des ersten Abschnitts 14 ein Führungsbolzen 37 vorgesehen ist, der in ein korrespondierendes Führungsloch 48 (siehe Fig. 3) der Trägereinrichtung 2, insbesondere im ersten Aufnahmeabschnitt 4, eingeführt werden kann, wodurch das Druckmodul an der Trägereinrichtung 2 befestigt und ausgerichtet wird.

Weiter dargestellt sind Gewindebohrungen 38 im ersten Abschnitt 14 und in einem Verbindungsabschnitt, über die das Druckmodul 11 mit der Trägereinrichtung 2 verschraubt werden kann. Beispielsweise können Schrauben durch Durchgangsöffnungen in der Trägereinrichtung 2, insbesondere durch Durchgangsöffnungen im Bereich des ersten Aufnahmeabschnitts 4 und des Verbindungsabschnitts 6, durchgeführt werden und in die Gewindebohrungen 38 eingreifen.

In Fig. 3 ist eine erfindungsgemäße Vorrichtung 1 in einer perspektivischen Ansicht dargestellt. Die Vorrichtung 1 weist eine Trägereinrichtung 2 auf, wobei die Trägereinrichtung 2, wie in Bezug auf Fig. 1 bereits erläutert, Aufnahmeelemente zur Befestigung und/oder Ausrichtung von Funktionsmodulen 11, 39, 40, 41, 42, 43, 44, 45, 46, 47 auf. So weist z.B. ein erster Aufnahmeabschnitt 3 Führungslöcher 48 zur Aufnahme eines Führungsbolzens 37 (siehe Fig. 2) eines Funktionsmoduls 11, 39, 40, 41, 42, 43, 44, 45, 46, 47 auf. Der Übersichtlichkeit halber ist nur ein Führungsloch 48 mit einem Bezugszeichen versehen.

Weiter dargestellt ist, dass ein Verbindungsabschnitt 6 Durchgangsbohrungen 49 aufweist, durch die ein Funktionsmodul 11, 39, 40, 41, 42, 43, 44, 45, 46, 47 mit der Trägereinrichtung 2 verschraubbar sind. Der Übersichtlichkeit halber ist nur eine Durchgangsbohrung 49 mit einem Bezugszeichen versehen.

Weiter weist ein weiterer Aufnahmeabschnitt 5 der Trägereinrichtung 2 ebenfalls Durchgangsbohrungen 50 auf, durch die ein erster Abschnitt 13 eines Funktionsmoduls 11, 39, 40, 41, 42, 43, 44, 45, 46, 47 mit der Trägereinrichtung 2 verschraubbar ist. Auch der erste Aufnahmeabschnitt 3 weist Durchgangsbohrungen 51 auf, die zur Verschraubung eines Funktionsmoduls 11, 39, 40, 41, 42, 43, 44, 45, 46, 47 mit dem ersten Abschnitt 3 der Trägereinrichtung 2 dienen. Der Übersichtlichkeit halber ist jeweils nur eine Durchgangsbohrung 50, 51 mit einem Bezugszeichen versehen. Alternativ zu einer Durchgangsbohrung 51 kann die Trägereinrichtung 2 an dieser Stelle auch eine Gewindebohrung oder einen, insbesondere hervorstehenden, Bolzen aufweisen oder ausbilden, die zur Aufnahme eines Funktionsmoduls 11, 39, 40, 41, 42, 43, 44, 45, 46, 47 dienen können.

Die Trägereinrichtung 2 weist, wie in Bezug auf Fig. 1 bereits erläutert, den ersten Aufnahmeabschnitt 3 und den weiteren Aufnahmeabschnitt 5 auf, die senkrecht zueinander orientiert sind. Weiter dargestellt ist ein plattenförmig ausgebildeter Halteabschnitt 7 zur Halterung von Führungsvorrichtungen für eine Verschiebetisch 8 (siehe Fig. 1).

Weiter dargestellt ist ein Referenzkoordinatensystem mit einer longitudinalen Raumrichtung x, die einer ersten Raumrichtung entspricht, einer lateralen Raumrichtung y, die einer zweiten Raumrichtung entspricht und einer vertikalen Raumrichtung z, die einer dritten Raumrichtung entspricht. In der ersten Raumrichtung x hintereinander sind in einer vorbestimmten Reihenfolge folgende Funktionsmodule 39, 40, 11, 41, 42, 43, 44, 45, 46, 47 an der Trägereinrichtung 2 befestigt. Ein erstes Funktionsmodul 39 bildet ein Heizmodul. Ein zweites Funktionsmodul 40 bildet ein lonisierungsmodul. Ein drittes Funktionsmodul ist als Druckmodul 11 (siehe Fig. 1) ausgebildet. Ein viertes Funktionsmodul 41, ein fünftes Funktionsmodul 42, ein sechstes Funktionsmodul 43, ein siebtes Funktionsmodul 44 und ein achtes Funktionsmodul 45 sind ebenfalls als Druckmodule ausgebildet. Diese Druckmodule 11, 41, 42, 43, 44, 45 können beispielsweise verschiedene Farben aus einem RGB-Farbraum oder einem CYMK-Farbraum auf einen Trägerkörper 9 (siehe Fig. 1) aufbringen. Insbesondere können die Druckmodule 11, 41, 42, 43, 44, 45 Module sein, die mittels eines Ink-Jet-Verfahrens Tinte aufbringen können. Das Druckmodul 11 kann hierbei insbesondere zum Aufbringen eines UV-härtenden Lacks dienen. Ein neuntes Funktionsmodul 46 ist als UV-Strahlungsmodul ausgebildet, welches eine UV-Lichtquelle, insbesondere eine UV-LED, umfasst. Ein zehntes Funktionsmodul 47 ist als Dummy-Modul ausgebildet, wobei ein Dummy-Modul keine Funktion aufweist, sondern als Platzhalter dient. Alle Funktionsmodule 39, 40, 11, 41, 42, 43, 44, 45, 46, 47 sind an vorbestimmten Positionen und mit der vorbestimmten gleichen Ausrichtung an der Trägereinrichtung 2 befestigt. Somit kann ein auf einem Verschiebetisch 8 (siehe Fig. 1) angeordneter Trägerkörper in der ersten Raumrichtung x nacheinander unter allen Funktionsmodulen 39, 40, 11, 41, 42, 43, 44, 45, 46, 47 vorbeibewegt werden, wobei während der Bewegung die verschiedenen Funktionsmodule 39, 40, 11, 41, 42, 43, 44, 45, 46, 47 jeweils die ihnen zugeordnete Funktion, beispielsweise die Druckfunktion, ausüben können. Die einzelnen Verfahrensschritte werden somit in einer gewünschten Reihenfolgen, insbesondere zeitlich sequenziell, also nacheinander, durch die verschiedenen Funktionsmodule 39, 40, 11, 41, 42, 43, 44, 45, 46, 47 ausgeführt.

Fig. 4 zeigt eine perspektivische Ansicht einer weiteren Vorrichtung 1. Diese weist wie die in Fig. 2 dargestellte Vorrichtung 1 eine Trägereinrichtung 2 auf, die entsprechend den Erläuterungen zu Fig. 3 ausgebildet ist. Im Unterschied zu der in Fig. 3 dargestellten Vorrichtung 1 umfasst die in Fig. 3 dargestellte Vorrichtung 1 jedoch nur vier Funktionsmodule, nämlich ein Heizmodul 39, ein Ionisierungsmodul 40, ein UV-Strahlungsmodul 46 und ein Dummy-Modul 47, welche in der ersten Raumrichtung x hintereinander angeordnet sind. Somit sind also die in Fig. 2 dargestellten Druckmodule 11, 41, 42, 43, 44, 45 entfernt.

Somit ist es möglich, die Funktionsmodule 39, 40, 11, 41, 42, 43, 44, 45, 46, 47 auch mit variablen Abständen zueinander, insbesondere entlang der ersten Raumrichtung x, anzuordnen.

Selbstverständlich ist es möglich, dass die Vorrichtung 1, insbesondere die Trägereinrichtung 2 und die Funktionsmodule 39, 40, 11, 41, 42, 43, 44, 45, 46, 47 in einem Gehäuse angeordnet sind. Das Gehäuse kann beispielsweise einen Deckel aufweisen, wobei der Deckel z.B. schwenkbar am Gehäuse befestigt sein kann. Der Deckel kann hierbei derart angeordnet sein, dass durch eine Öffnung des Gehäuses im geöffneten Zustand des Deckels Funktionsmodule 39, 40, 11, 41, 42, 43, 44, 45, 46, 47 aus dem Gehäuse entnehmbar oder in das Gehäuse einbringbar sind.

Wie in den Fig. 1 bis 3 dargestellt, können alle Funktionsmodule 39, 40, 11, 41, 42, 43, 44, 45, 46, 47 mit der gleichen Ausrichtung an verschiedenen Positionen an der Trägereinrichtung 2 befestigt sein. Hierdurch wird auch eine einfache Austauschbarkeit gewährleistet, wodurch eine erneute Justierung der Vorrichtung 1 zur Herstellung nicht oder nur in wenigen Fällen erforderlich ist.

### Bezugszeichenliste

- 1: Druckeinrichtung
- 2: Trägereinrichtung
- 4: erster Aufnahmeabschnitt
- 5: weiterer Aufnahmeabschnitt
- 6: Verbindungsabschnitt
- 7: weiterer Tragarm
- 8: Verschiebetisch
- 9: Trägerkörper
- 10: Druckkopf
- 11: Druckmodul
- 12: Gehäuse
- 13: erster Abschnitt des Gehäuses
- 14: weiterer Abschnitt des Gehäuses
- 15: erster Behälter
- 16: weiterer Behälter
- 17: Druckkopfeinlass
- 18: Druckkopfauslass
- 19: Schlauch
- 20: Einlass des ersten Behälters
- 21: Auslass des weiteren Behälters
- 22: weiterer Einlass des ersten Behälters
- 23: Düse
- 24: erste Druckerzeugungseinrichtung
- 25: weitere Druckerzeugungseinrichtung
- 26: Drucksensor
- 27: weiterer Drucksensor
- 28: Steuereinrichtung
- 29: Anzeigeeinrichtung
- 30: Kommunikationsschnittstelle
- 31: weiterer Einlass des weiteren Behälters
- 32: Auslass des ersten Behälters
- 33: Einlass des weiteren Behälters
- 34: Aufnahmeöffnungen
- 35: Abstützfüße
- 36: Absetzfläche
- 37: Führungsbolzen
- 38: Gewindebohrungen
- 39: erstes Funktionsmodul
- 40: zweites Funktionsmodul
- 41: drittes Funktionsmodul
- 42: viertes Funktionsmodul
- 43: fünftes Funktionsmodul
- 44: sechstes Funktionsmodul
- 45: siebtes Funktionsmodul
- 46: achtes Funktionsmodul
- 47: neuntes Funktionsmodul
- 48: Führungsloch
- 49: Durchgangsbohrung
- 40: Durchgangsbohrung
- 51: Durchgangsbohrung
- x: longitudinale Raumrichtung, erste Raumrichtung
- y: laterale Raumrichtung, zweite Raumrichtung
- z: vertikale Raumrichtung, dritte Raumrichtung, Düsenauslassrichtung
- g: Gravitationskraft

## Patentansprüche

1. Vorrichtung zur Herstellung eines Wert- und/oder Sicherheitsdokuments, wobei die Vorrichtung (1) eine Trägereinrichtung (2) aufweist, wobei die Trägereinrichtung (2) Aufnahmeelemente zur Befestigung und/oder Ausrichtung einer vorbestimmten Anzahl von Funktionsmodulen (39, 40, 11 ,41, 42, 43, 44, 45, 46, 47) aufweist oder ausbildet,
wobei
die Aufnahmeelemente derart angeordnet und/oder ausgebildet sind, dass mehrere Funktionsmodule (39, 40, 11 ,41, 42, 43, 44, 45, 46, 47) in einer beliebigen Reihenfolge an der Trägereinrichtung (2) befestigbar sind,
**dadurch gekennzeichnet, dass**
die Trägereinrichtung (2) einen ersten Aufnahmeabschnitt (4) und einen weiteren Aufnahmeabschnitt (5) aufweist, wobei der weitere Aufnahmeabschnitt (5) mit einem vorbestimmten Winkel schräg zum ersten Aufnahmeabschnitt (4) angeordnet ist.

2. Vorrichtung nach Anspruch 1, **dadurch gekennzeichnet, dass** die Vorrichtung (1) mindestens ein Funktionsmodul (39, 40, 11, 41, 42, 43, 44, 45, 46, 47) umfasst, wobei das Funktionsmodul (39, 40, 11, 41, 42, 43, 44, 45, 46, 47) an der Trägereinrichtung (1) in einer vorbestimmten Position und/oder mit einer vorbestimmten Ausrichtung befestigt ist.

3. Vorrichtung nach einem der Ansprüche 1 bis 2, **dadurch gekennzeichnet, dass** ein Funktionsmodul (39, 40, 11, 41, 42, 43, 44, 45, 46, 47) einen ersten Abschnitt (13) und einen weiteren Abschnitt (14) aufweist, wobei der weitere Abschnitt (14) mit dem vorbestimmten Winkel schräg zum ersten Abschnitt (13) angeordnet ist.

4. Vorrichtung nach einem der Ansprüche 1 bis 3, **dadurch gekennzeichnet, dass** ein Funktionsmodul (39, 40, 11, 41, 42, 43, 44, 45, 46, 47) als Druckmodul (11, 41, 42, 43, 44, 45), als Heizmodul oder als Strahlungsmodul oder als Oberflächenvorbehandlungs-Modul ausgebildet ist.

5. Vorrichtung nach einem der Ansprüche 1 bis 4, **dadurch gekennzeichnet, dass** ein Funktionsmodul (39, 40, 11 ,41, 42, 43, 44, 45, 46, 47) als Druckmodul (11, 41, 42, 43, 44, 45) ausgebildet ist, wobei das Druckmodul (11, 41, 42, 43, 44, 45) zumindest einen Druckkopf (10) und zumindest einen ersten Behälter (15) umfasst, wobei der mindestens eine Druckkopf (10) einen Druckkopfeinlass (17) und mindestens eine Düse (23) aufweist, wobei der Druckkopf (10) einen Druckkopfauslass (18) aufweist und über den Druckkopfauslass (18) mit dem ersten Behälter (15) verbunden ist, wobei zumindest ein Teil des ersten Behälters (15) in einer Düsenauslassrichtung vor dem mindestens einen Druckkopfauslass (18) angeordnet ist.

6. Verfahren zum Herstellen einer Vorrichtung (1) zum Herstellen eines Wert- und/oder Sicherheitsdokuments, wobei mindestens eine Trägereinrichtung (2) bereitgestellt wird, die Aufnahmeelemente zum Befestigen und/oder Ausrichten einer vorbestimmten Anzahl von Funktionsmodulen (39, 40, 11, 41, 42, 43, 44, 45, 46, 47) aufweist oder ausbildet, wobei die Aufnahmeelemente derart angeordnet und/oder ausgebildet sind, dass mehrere Funktionsmodule (39, 40, 11, 41, 42, 43, 44, 45, 46, 47) in einer beliebigen Reihenfolge an der Trägereinrichtung (2) befestigbar sind, wobei weiter mindestens ein Funktionsmodul (39, 40, 11, 41, 42, 43, 44, 45, 46, 47) bereitgestellt wird und mittels zumindest einem Teil der Aufnahmeelemente in einer vorbestimmten Position und/oder mit einer vorbestimmten Ausrichtung an der Trägereinrichtung (2) befestigt wird, **dadurch gekennzeichnet, dass** die Trägereinrichtung (2) einen ersten Aufnahmeabschnitt (4) und einen weiteren Aufnahmeabschnitt (5) aufweist, wobei der weitere Aufnahmeabschnitt (5) mit einem vorbestimmten Winkel schräg zum ersten Aufnahmeabschnitt (4) angeordnet ist.

7. Verfahren nach Anspruch 6, **dadurch gekennzeichnet, dass** mehrere Funktionsmodule (39, 40, 11, 41, 42, 43, 44, 45, 46, 47) mit vorbestimmten Positionen und/oder mit vorbestimmten Ausrichtungen in einer gewünschten Reihenfolge an der Trägereinrichtung (2) befestigt werden.

8. Verfahren zum Herstellen eines Wert- und/oder Sicherheitsdokuments mittels einer Vorrichtung (1) gemäß einer der Ansprüche 1 bis 5, wobei das Wert- und/oder Sicherheitsdokument auf oder an einer Positioniereinrichtung angeordnet wird, wobei die Positioniereinrichtung in mindestens einer ersten Raumrichtung (x) relativ zu mindestens einem Funktionsmodul (39, 40, 11, 41, 42, 43, 44, 45, 46, 47), welches mittels zumindest einem Teil der Aufnahmeelemente an der Trägereinrichtung (2) befestigt ist, bewegt wird, wobei das Funktionsmodul (39, 40, 11, 41, 42, 43, 44, 45, 46, 47) zumindest einen Teilschritt des Verfahrens durchführt.

## Claims

1. Apparatus for producing a valuable and/or security document, wherein the apparatus (1) comprises a carrier device (2), wherein the carrier device (2) has or forms receptacle elements for fixing and/or aligning a predetermined number of function modules (39, 40, 11, 41, 42, 43, 44, 45, 46, 47),
wherein
the receptacle elements are arranged and/or formed in such a way that a plurality of function modules (39, 40, 11, 41, 42, 43, 44, 45, 46, 47) can be fixed to the carrier device (2) in an arbitrary order,
**characterised in that**
the carrier device (2) comprises a first receptacle section (4) and a further receptacle section (5), wherein the further receptacle section (5) is arranged at a predetermined angle obliquely to the first receptacle section (4).

2. Apparatus according to claim 1, **characterised in that** the apparatus (1) comprises at least one function module (39, 40, 11, 41, 42, 43, 44, 45, 46, 47), wherein the function module (39, 40, 11, 41, 42, 43, 44, 45, 46, 47) is secured to the carrier device (2) in a predetermined position and/or with a predetermined alignment.

3. Apparatus according to any one of claims 1 to 2, **characterised in that** a function module (39, 40, 11, 41, 42, 43, 44, 45, 46, 47) comprises a first section (13) and a further section (14), wherein the further section (14) is arranged at the predetermined angle obliquely to the first section (13).

4. Apparatus according to any one of claims 1 to 3, **characterised in that** a function module (39, 40, 11, 41, 42, 43, 44, 45, 46, 47) is configured as a printing module (11, 41, 42, 43, 44, 45), as a heating module, or as a radiation module or as a surface pre-treatment module.

5. Apparatus according to any one of claims 1 to 4, **characterised in that** a function module (39, 40, 11, 41, 42, 43, 44, 45, 46, 47) is configured as a printing module (11, 41, 42, 43, 44, 45), wherein the printing module (11, 41, 42, 43, 44, 45) comprises at least one printing head (10) and at least one first container (15), wherein the at least one printing head (10) comprises a printing head inlet (17) and at least one nozzle (23), wherein the printing head (10) comprises a printing head outlet (18), and is connected by means of the printing head outlet (18) to the first container (15), wherein at least one part of the first container (15) is arranged in a nozzle outlet direction upstream of the at least one printing head outlet (18).

6. Method for producing an apparatus (1) for producing a valuable and/or security document, wherein at least one carrier device (2) is provided, which has or forms receptacle elements for fixing and/or aligning a predetermined number of function modules (39, 40, 11, 41, 42, 43, 44, 45, 46, 47), wherein the receptacle elements are arranged and/or formed in such a way that a plurality of function modules (39, 40, 11, 41, 42, 43, 44, 45, 46, 47) can be fixed to the carrier device (2) in an arbitrary order, wherein, further, at least one function module (39, 40, 11, 41, 42, 43, 44, 45, 46, 47) is provided, and is secured by means of at least a part of the receptacle elements in a predetermined position and/or in a predetermined alignment at the carrier device (2), **characterised in that** the carrier device (2) comprises a first receptacle section (4) and a further receptacle section (5), wherein the further receptacle section (5) is arranged at a predetermined angle obliquely to the first receptacle section (4).

7. Method according to claim 6, **characterised in that** a plurality of function modules (39, 40, 11, 41, 42, 43, 44, 45, 46, 47) are secured at predetermined positions and/or predetermined alignments in a desired sequence at the carrier device (2).

8. Method for producing a valuable and/or security document by means of an apparatus (1) according to any one of claims 1 to 5, wherein the valuable and/or security document is arranged on or at a positioning device, wherein the positioning device is moved in at least one first spatial direction (x) relative to at least one function module (39, 40, 11, 41, 42, 43, 44, 45, 46, 47), which is secured by means of at least one part of the receptacle elements to the carrier device (2), and wherein the function module (39, 40, 11, 41, 42, 43, 44, 45, 46, 47) carries out at least a partial step of the method.

## Revendications

1. Dispositif pour fabriquer un document de valeur et/ou de sécurité, dans lequel le dispositif (1) présente un système de support (2), dans lequel le système de support (2) présente ou réalise des éléments de logement pour fixer et/ou à orienter un nombre prédéfini de modules fonctionnels (39, 40, 11, 41, 42, 43, 44, 45, 46, 47),
dans lequel
les éléments de logement sont disposés et/ou réalisés de telle manière que plusieurs modules fonctionnels (39, 40, 11, 41, 42, 43, 44, 45, 46, 47) peuvent être fixés au niveau du système de support (2) selon un ordre quelconque,
**caractérisé en ce que**
le système de support (2) présente une première section de logement (4) et une autre section de logement (5), dans lequel l'autre section de logement (5) est disposée de manière oblique par rapport à la première section de logement (4) selon un angle prédéfini.

2. Dispositif selon la revendication 1, **caractérisé en ce que** le dispositif (1) comprend au moins un module fonctionnel (39, 40, 11, 41, 42, 43, 44, 45, 46, 47), dans lequel le module fonctionnel (39, 40, 11, 41, 42, 43, 44, 45, 46, 47) est fixé dans une position prédéfinie et/ou selon une orientation prédéfinie au niveau du système de support (1).

3. Dispositif selon l'une quelconque des revendications 1 à 2, **caractérisé en ce qu'**un module fonctionnel (39, 40, 11, 41, 42, 43, 44, 45, 46, 47) présente une première section (13) et une autre section (14), dans lequel l'autre section (14) est disposée de manière oblique par rapport à la première section (13) selon l'angle prédéfini.

4. Dispositif selon l'une quelconque des revendications 1 à 3, **caractérisé en ce qu'**un module fonctionnel (39, 40, 11, 41, 42, 43, 44, 45, 46, 47) est réalisé en tant que module d'impression (11, 41, 42, 43, 44, 45), en tant que module de chauffage ou en tant que module de rayonnement ou en tant que module de traitement préalable de surfaces.

5. Dispositif selon l'une quelconque des revendications 1 à 4, **caractérisé en ce qu'**un module fonctionnel (39, 40, 11, 41, 42, 43, 44, 45, 46, 47) est réalisé en tant que module d'impression (11, 41, 42, 43, 44, 45), dans lequel le module d'impression (11, 41, 42, 43, 44, 45) comprend au moins une tête d'impression (10) et au moins un premier contenant (15), dans lequel l'au moins une tête d'impression (10) présente une entrée de tête d'impression (17) et au moins une buse (23), dans lequel la tête d'impression (10) présente une sortie de tête d'impression (18) et est reliée au premier contenant (15) par l'intermédiaire de la sortie de tête d'impression (18), dans lequel au moins une partie du premier contenant (15) est disposée dans une direction de sortie de buse devant l'au moins une sortie de tête d'impression (18).

6. Procédé pour fabriquer un dispositif (1) pour fabriquer un document de valeur et/ou de sécurité, dans lequel est fourni au moins un système de support (2), qui présente ou réalise des éléments de logement pour fixer et/ou orienter un nombre prédéfini de modules fonctionnels (39, 40, 11, 41, 42, 43, 44, 45, 46, 47), dans lequel les éléments de logement sont disposés et/ou réalisés de telle manière que plusieurs modules fonctionnels (39, 40, 11, 41, 42, 43, 44, 45, 46, 47) peuvent être fixés au niveau du système de support (2) selon un ordre quelconque,
dans lequel en outre au moins un module fonctionnel (39, 40, 11, 41, 42, 43, 44, 45, 46, 47) est fourni et est fixé au niveau du système de support (2) dans une position prédéfinie et/ou selon une orientation prédéfinie au moyen d'au moins une partie des éléments de logement, **caractérisé en ce que** le système de support (2) présente une première section de logement (4) et une autre section de logement (5), dans lequel l'autre section de logement (5) est disposée de manière oblique par rapport à la première section de logement (4) selon un angle prédéfini.

7. Procédé selon la revendication 6, **caractérisé en ce que** plusieurs modules fonctionnels (39, 40, 11, 41, 42, 43, 44, 45, 46, 47) sont fixés au niveau du système de support (2) selon un ordre souhaité avec des positions prédéfinies et/ou selon des orientations prédéfinies.

8. Procédé pour fabriquer un document de valeur et/ou de sécurité au moyen d'un dispositif (1) selon l'une quelconque des revendications 1 à 5, dans lequel le document de valeur et/ou de sécurité est disposé sur ou au niveau d'un système de positionnement, dans lequel le système de positionnement est déplacé dans au moins une première direction spatiale (x) par rapport à au moins un module fonctionnel (39, 40, 11, 41, 42, 43, 44, 45, 46, 47), lequel est fixé au niveau du système de support (2) au moyen d'au moins une partie des éléments de logement, dans lequel le module fonctionnel (39, 40, 11, 41, 42, 43, 44, 45, 46, 47) effectue au moins une étape partielle du procédé.
